(19) Europäisches Patentamt / European Patent Office / Office européen des brevets

(11) **EP 4 451 711 A1**

(12) **EUROPEAN PATENT APPLICATION**
published in accordance with Art. 153(4) EPC

(43) Date of publication:
**23.10.2024 Bulletin 2024/43**

(21) Application number: **22915233.5**

(22) Date of filing: **30.12.2022**

(51) International Patent Classification (IPC):
**H04W 4/02** (2018.01)

(52) Cooperative Patent Classification (CPC):
**H04W 4/02;** Y02D 30/70

(86) International application number:
**PCT/CN2022/144199**

(87) International publication number:
**WO 2023/125986 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.12.2021 CN 202111679567**

(71) Applicant: **VIVO MOBILE COMMUNICATION CO.,
LTD.**
**Dongguan, Guangdong 523863 (CN)**

(72) Inventors:
• **JIANG, Dajie**
  **Dongguan, Guangdong 523863 (CN)**
• **WU, Jianming**
  **Dongguan, Guangdong 523863 (CN)**

(74) Representative: **Murgitroyd & Company**
**165-169 Scotland Street**
**Glasgow G5 8PL (GB)**

(54) **POSITIONING METHOD AND APPARATUS, AND COMMUNICATION DEVICE**

(57) The application discloses a positioning method and apparatus and a communication device, belonging to the field of communication technology. The positioning method of embodiments of this application includes that: a backscatter end receives a first signal sent by a first communication device; the backscatter end modulates the first signal based on a second reference signal modulation sequence to obtain a second signal; and the backscatter end sends the second signal to a second communication device, where the second reference signal modulation sequence is an orthogonal sequence determined based on on-off keying OOK modulation information.

FIG. 2

**Description**

**CROSS-REFERENCE TO RELATED APPLICATION**

This application claims priority to Chinese Patent Application No. 202111679567.2, filed on December 31, 2021, which is incorporated herein by reference in its entirety.

**TECHNICAL FIELD**

This application belongs to the field of communication technology, and specifically relates to a positioning method and apparatus and a communication device.

**BACKGROUND**

In a related communication technology, a sensing-based positioning technology based on a backscatter (Backscatter) characteristic is introduced. The sensing-based positioning technology based on the backscatter characteristic provides relevant information of an identity (Identity, ID) of a backscatter device through a backscatter end, so that a receiving end can perform sensing-based positioning on a reflecting object based on the relevant information of the ID.
However, in a process of receiving information, the receiving end is also affected by an interference signal in a positioning process. Therefore, a sensing-based positioning technology based on a backscatter characteristic adopted in a related technology still has poor positioning precision.

**SUMMARY**

The embodiment of the application provides a positioning method and apparatus and a communication device, which can eliminate interference and improve positioning precision.
According to a first aspect, a positioning method is provided, including: A backscatter end receives a first signal sent by a first communication device; modulating, by the backscatter end, the first signal based on a second reference signal modulation sequence to obtain a second signal; and the backscatter end sends the second signal to a second communication device, where the second reference signal modulation sequence is an orthogonal sequence determined based on on-off keying OOK modulation information.
According to a second aspect, a positioning method is provided, where the second aspect includes: A second communication device receives a target signal, where the target signal includes at least a first signal sent by a first communication device and/or a second signal transmitted by at least one backscatter end; and the second communication device positions at least one of the first communication device, the second communication device, and a target backscatter end based on the first signal and/or at least one second signal, where the target backscatter end is any one of the at least one backscatter end, and the second signal is obtained by modulating the first signal based on a second reference signal modulation sequence, and the second reference signal modulation sequence is an orthogonal sequence determined based on on-off keying OOK modulation information.
According to a third aspect, a positioning method is provided, including: A network side device sends a second reference signal modulation sequence to each backscatter end based on identification information of at least one backscatter end; or the network side device sends a first modulation matrix to at least one backscatter end, where the second reference signal modulation sequence is an orthogonal sequence determined based on on-off keying OOK modulation information, and the second reference signal modulation sequence is any one of a plurality of row vectors included in the first modulation matrix.
According to a fourth aspect, a positioning apparatus is provided, including: a first receiving module, configured to receive a first signal sent by a first communication device; a first modulation module, configured to modulate the first signal based on a second reference signal modulation sequence to obtain a second signal; and a first sending module, configured to send the second signal to a second communication device, where the second reference signal modulation sequence is an orthogonal sequence determined based on on-off keying OOK modulation information.
According to a fifth aspect, a positioning apparatus is provided, where the positioning apparatus includes: a second receiving module, configured to receive a target signal, where the target signal includes at least a first signal transmitted by a first communication device and/or a second signal transmitted by at least one backscatter end; and a positioning module, configured to locate at least one of the first communication device, a second communication device and a target backscatter end based on the first signal and/or at least one second signal, where the target backscatter end is any one of the at least one backscatter end, and the second signal is obtained by modulating the first signal based on a second reference signal modulation sequence, and the second reference signal modulation sequence is an orthogonal sequence determined based on on-off keying OOK modulation information.

According to a sixth aspect, a positioning apparatus is provided, including: a second sending module, configured to send, based on identification information of at least one backscatter end, a second reference signal modulation sequence to each backscatter end; or a second sending module, configured to send a first modulation matrix to at least one backscatter end, where the second reference signal modulation sequence is an orthogonal sequence determined based on on-off keying OOK modulation information, and the second reference signal modulation sequence is any one of a plurality of row vectors included in the first modulation matrix.

According to a seventh aspect, a communication device is provided. The communication device includes a processor and a memory. The memory stores a program or instructions executable on the processor. When the program or instructions are executed by the processor, steps of the method described in the first aspect or the second aspect or the third aspect are implemented.

According to a seventh aspect, a communication device is provided, including a processor and a communication interface, where the communication interface is coupled to the processor, and the processor is configured to run a program or instructions, to implement steps of the method described in the first aspect, or to implement steps of the method described in the second aspect, or to implement steps of the method described in the third aspect.

According to a ninth aspect, a positioning system is provided, including: a first communication device and a second communication device, where the first communication device may be configured to perform steps of the method described in the first aspect, and the second communication device may be configured to perform steps of the method described in the second aspect.

According to a tenth aspect, a readable storage medium is provided. A program or instructions are stored on the readable storage medium. When the program or instructions are executed by a processor, steps of the method described in the first aspect are implemented, or steps of the method described in the second aspect are implemented, or steps of the method described in the third aspect are implemented.

According to an eleventh aspect, a chip is provided, where the chip includes a processor and a communication interface, the communication interface is coupled to the processor, and the processor is configured to run a program or instructions, to implement steps of the method described in the first aspect, or to implement steps of the method described in the second aspect, or to implement steps of the method described in the third aspect.

According to a twelfth aspect, a computer program product is provided, the computer program product is stored in a storage medium, and the computer program product is run by at least one processor, to implement steps of the method described in the first aspect, or to implement steps of the method described in the second aspect, or to implement steps of the method described in the third aspect.

In embodiments of this application, a backscatter end modulates and sends a received first signal based on a second reference signal modulation sequence, to enable a second communication device to process a received target signal by utilizing an orthogonal characteristic of the second reference signal modulation sequence, to eliminate an interference signal, locate a first communication device, a second communication device, or a target backscatter end, and improve the positioning precision.

**BRIEF DESCRIPTION OF THE DRAWINGS**

FIG. 1a is a schematic diagram of an architecture of a wireless communication system according to an embodiment of this application;

FIG. 1b is a schematic diagram 1 of a structure of a positioning system according to an embodiment of this application;

FIG. 1c is a schematic diagram 2 of a structure of a positioning system according to an embodiment of this application;

FIG. 1d is a schematic diagram 3 of a structure of a positioning system according to an embodiment of this application;

FIG. 2 is a schematic flowchart 1 of a positioning method according to an embodiment of this application;

FIG. 3 is a schematic flowchart 2 of a positioning method according to an embodiment of this application;

FIG. 4a is a schematic diagram of a relationship between modulation time lengths of a first reference signal modulation sequence and a second reference signal modulation sequence according to an embodiment of this application;

FIG. 4b is a schematic diagram 1 of a modulation process in which M backscatter ends perform signal modulation based on a second reference signal modulation sequence according to an embodiment of this application;

FIG. 4c is a schematic diagram 2 of a modulation process in which M backscatter ends perform signal modulation based on a second reference signal modulation sequence according to an embodiment of this application;

FIG. 4d is a schematic diagram 4 of a structure of a positioning system according to an embodiment of this application;

FIG. 4e is a schematic diagram 5 of a structure of a positioning system according to an embodiment of this application;

FIG. 5 is a schematic flowchart 3 of a positioning method according to an embodiment of this application;

FIG. 6 is a schematic flowchart 4 of a positioning method according to an embodiment of this application;

FIG. 7 is a schematic diagram 1 of a structure of a positioning apparatus according to an embodiment of this application;

FIG. 8 is a schematic diagram 2 of a structure of a positioning apparatus according to an embodiment of this application;

FIG. 9 is a schematic diagram 3 of a structure of a positioning apparatus according to an embodiment of this application;

FIG. 10 is a schematic diagram of a structure of a communication device according to an embodiment of this application;

FIG. 11 is a schematic diagram of a structure of a terminal according to an embodiment of the present application; and

FIG. 12 is a schematic diagram of a structure of a network side device according to an embodiment of this application.

## DETAILED DESCRIPTION

The following clearly describes the technical solutions in embodiments of this application with reference to the accompanying drawings in the embodiments of this application. Apparently, the described embodiments are merely some rather than all of embodiments of this application. All other embodiments obtained by a person skilled in the art based on embodiments of this application fall within the protection scope of this application.

In the specification, claims, and accompanying drawings of this application, the terms "first", "second", "third", "fourth", and so on (if existent) are intended to distinguish between similar objects but do not indicate a specific order or sequence. The terms used herein should be understood as interchangeable in a proper case so that embodiments of this application can be implemented in an order other than that depicted or described herein, and the "first" and "second" objects typically denote a class of objects and are not limited to a specific number of objects, for example, the first object may be one or more. In addition, "and/or" used in this specification and the claims represents at least one of the connected objects. The character "/" generally indicates an "or" relationship between associated objects before and after the character.

It should be noted that, the technologies described in this application are not limited to a long term evolution (Long Term Evolution, LTE)/LTE-advanced (LTE-Advanced, LTE-A) system, and may further be applied to various wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single carrier frequency division multiple access (Single Carrier Frequency Division Multiple Access, SC-FDMA), and other systems. The terms "system" and "network" as used in embodiments of this application are often interchangeably used, and the technology described can be applied to the systems and radio technologies mentioned above, and can also be applied to other systems and radio technologies. The following descriptions describe a new radio (New Radio, NR) system for example purposes and uses an NR term in most of the following descriptions, but these techniques may also be applied to an application other than an NR system application, like a 6th generation (6th Generation, 6G) communication system.

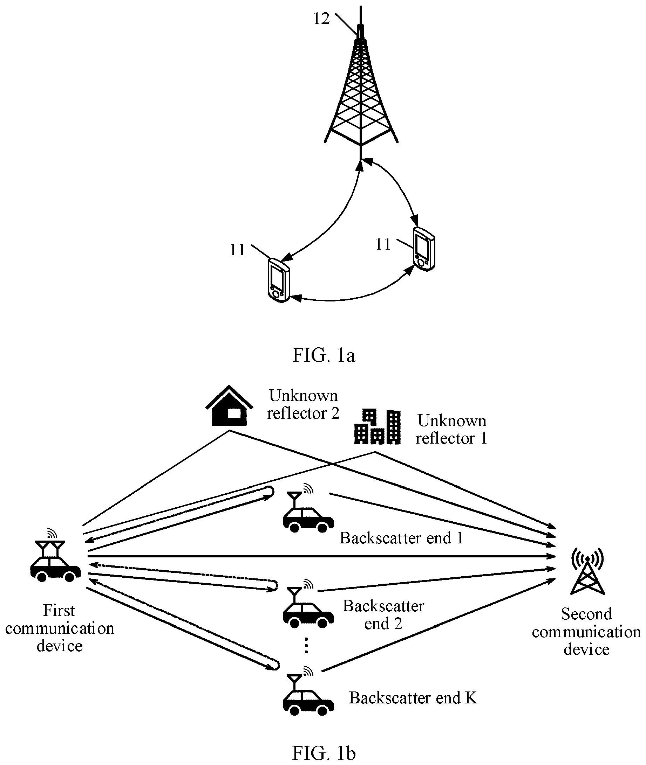

FIG. 1a is a block diagram of a wireless communication system applicable to embodiments of this application. The wireless communication system includes a terminal 11 and a network side device 12. The terminal 11 may be a terminal side device like a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile Personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), smart home (home equipment with wireless communication function, for example, a refrigerator, a TV, a washing machine, and a furniture), a game machine, a personal computer (personal computer, PC), a teller machine, or self-service machine, and the wearable device includes: a smart watch, a smart band, a smart headphone, smart glasses, smart jewelry (a smart bracelet, a smart wristband, a smart ring, a smart necklace, a smart anklet, a smart ankle chain, and the like), a smart wristband, smart clothing, and the like. It should be noted that, a specific type of the terminal 11 is not limited in embodiments of this application. The network side device 12 may include an access network device or a core network device, where the access network device 12 may also be referred to as a radio access network device, a radio access network (Radio Access Network, RAN), a wireless access network function or a wireless access network unit. The access network device 12 may include a base station, a wireless local area network (Wireless Local Area Network, WLAN) access point, or a wireless fidelity (Wireless Fidelity Wi-Fi) node, and the like. The base station may be referred to as a Node B, an evolved node B (eNB), an access point, a base transceiver station (Base Transceiver Station, BTS), a radio base station, a radio transceiver, a basic service set (Basic Service Set, BSS), an extended service set (Extended Service Set, ESS), a home Node B, a home evolved Node B, a transmitting receiving point (Transmitting Receiving Point, TRP), or some other suitable term in the described art, which is not limited to a particular technical vocabulary as long as the same technical effect is achieved. It should be noted that, only a base station in an NR system is used as an example in embodiments of this application, but a specific type of the base station is not limited.

Based on the foregoing description of the wireless communication system, as shown in FIG. 1b, embodiments of this application also provide a positioning system, where the positioning system includes a first communication device, a second communication device, K backscatter (Backscatter) ends and two unknown reflectors (Object). It should be noted that the positioning system includes but is not limited to objects shown in FIG. 1b, for example, the positioning system may include more or fewer objects than those shown in FIG. 1b, for example, the positioning system may include a plurality of second communication devices, a plurality of unknown reflectors, and the like. This is not limited herein.

The first communication device serves as a signal sending end, and the second communication device serves as a signal receiving end and a positioning/measuring end. It should be noted that device types of the first communication device and the second communication device are different in different positioning scenarios.

For example, it is assumed that a positioning scenario is a UU uplink positioning scenario shown in FIG. 1b. Then, the first communication device may be a terminal, for example, a vehicle or the like shown in FIG. 1b, and the second communication device is a network side device, for example, a gNB shown in FIG. 1b.

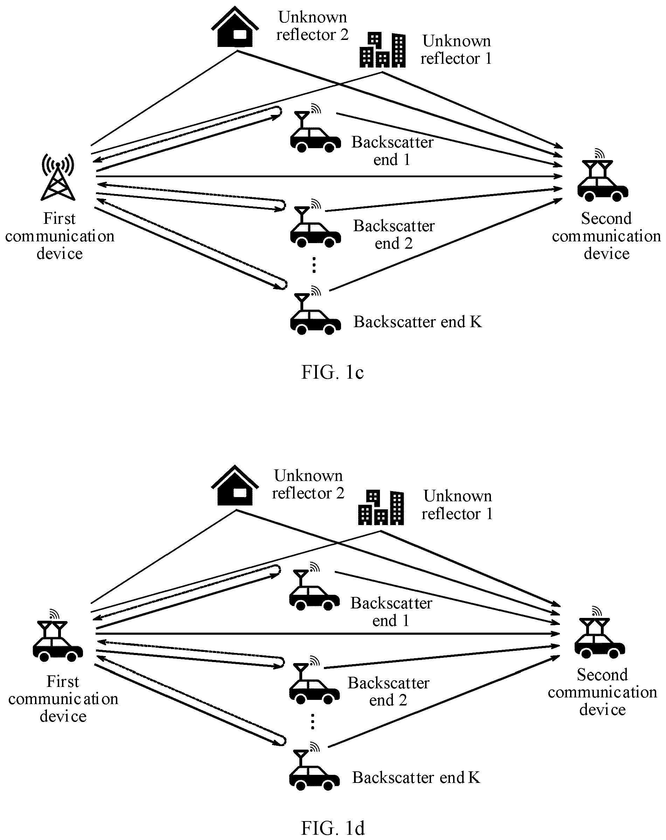

For another example, it is assumed that a positioning scenario is a UU downlink positioning scenario. Then, the first communication device may be a network side device like a gNB shown in FIG. 1c, and the second communication device may be a terminal like a vehicle shown in FIG. 1c.

For another example, it is assumed that a positioning scenario is a sidelink (Sidelink, SL) positioning scenario. Then, both the first communication device and the second communication device may be terminals, such as vehicles shown in FIG. 1d, and vehicles shown in FIG. 1b. Refer to FIG. 1d again. In addition, it should be noted that, if a positioning scenario is an SL positioning scenario, the positioning system may also include a network side device to serve the first communication device, the second communication device, and K backscatter ends, for example, to provide a second reference signal modulation sequence for the backscatter end.

The backscatter end is configured to modulate a signal from the first communication device and then send (for example, reflect) the signal. Correspondingly, the second communication device can locate the second communication device or the first communication device or the backscatter end based on the received signal sent by the backscatter end and/or the signal sent by the first communication device. In this embodiment, according to different application scenarios, a device type of the backscatter end may be different. For example, for a V2X application scenario, the backscatter end may be a vehicle-to-everything (Vehicle-to-Everything, V2X) user equipment (User Equipment, UE), a tag (Tag) arranged on the V2X UE, and the like. This is not limited herein.

The unknown reflector may be any object existing in the positioning scenario capable of implementing signal reflection, like a building, a vehicle, and a smart device. This is not limited herein.

It can be understood that in the positioning system, in addition to impact of the unknown reflector on positioning precision, for different positioning objects, a signal on a device other than the positioning object also interferes with positioning of the positioning object. For example, it is assumed that the positioning object is the first communication device or the second communication device, a signal on the backscatter end may also interfere with positioning of the first communication device or the second communication device. For another example, it is assumed that the positioning object is a target backscatter end, a signal on a backscatter end other than the target backscatter end and a signal on the first communication device interfere with positioning of the target backscatter end.

Certainly, for the foregoing different positioning scenarios, the second communication device serves as a terminal for performing positioning operations. For example, in the UU uplink positioning scenario and the SL positioning scenario, the second communication device can locate the first communication device and/or the backscatter end, and in the UU positioning scenario, the second communication device can locate the second communication device (for example, the second communication device) and/or the backscatter end. It should be noted that, regardless of a positioning scenario, for a type of the terminal, reference can be made to related description of the terminal 11 and for the network side device, reference can be made to related description of the network side device 12.

In addition, a positioning scheme provided in this application may be applied to, but is not limited to, a monostatic backscatter communication system (Monostatic Backscatter Communication System, MBCS), a bistatic backscatter communication system (Bistatic Backscatter Communication System, BBCS), and an ambient backscatter communication system (Ambient Backscatter Communication System, ABCS). For clarity of description, the technical solution provided by embodiments of this application is introduced in subsequent embodiments on the premise of taking a bistatic backscatter positioning scenario as an example and assuming complete synchronization among each backscatter end and the first communication device and the second communication device.

Based on this, the technical solution provided by embodiments of the present application is described in detail below with reference to the accompanying drawings through some embodiments and application scenarios thereof.

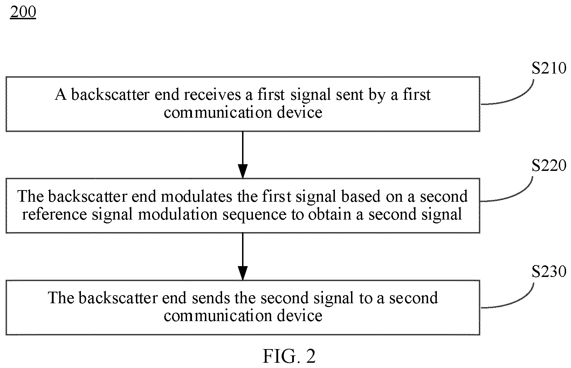

FIG. 2 is a schematic flowchart of a positioning method 200 provided by an example embodiment of this application. The method 200 may, but is not limited to, be executed by a first communication device, and in particular may be executed by hardware and/or software installed in the first communication device. In this embodiment, the method may at least include the following steps:

S210: A backscatter end receives a first signal sent by a first communication device.

Before a positioning process starts, a second communication device performing positioning can select a communication device near the backscatter end as the first communication device, to reduce a distance between the backscatter end and the first communication device. This reduces a round-trip path loss and ensures that the second communication device receives a reflected signal with a higher signal-to-noise ratio (Signal-to-noise ratio, SNR).

The first signal may be obtained by the first communication device based on a first reference signal modulation sequence. Optionally, the first reference signal modulation sequence may be a positioning reference signal (Positioning Reference Signal, PRS) modulation sequence, a sounding reference signal (Sounding Reference Signal, SRS) modulation sequence, a channel state information reference signal (Channel State Information Reference Signal, CSI-RS) modulation sequence, a demodulation reference signal (Demodulation Reference Signal, DMRS) sequence, and the like. Correspondingly, the first signal may be a PRS, an SRS, a CSI-RS, a DMRS, and the like.

In this embodiment, the first reference signal modulation sequence may include N symbols s (n). The symbol s (N) may be an orthogonal frequency division multiplexing (Orthogonal Frequency Division Multiplexing, OFDM) symbol, a code division multiple access (Code Division Multiple Access, CDMA) symbol, and the like, where N is an integer greater than or equal to 1, and $1 \leq n \leq N$. Based on this, in an implementation, the first reference signal modulation sequence symbol may reuse a positioning pilot PRS signal in the 3rd Generation Partnership Project (3rd Generation Partnership Project, 3GPP). That is, each symbol of the first reference signal modulation sequence may be determined based on an OFDM symbol or an OFDM slot.

In addition, based on different positioning requirements, the first reference signal modulation sequence may be pre-configured in the first communication device, or may be obtained by the first communication device from a network side device (like a serving base station of the first communication device). This is not limited herein.

S220: The backscatter end modulates the first signal based on a second reference signal modulation sequence to obtain a second signal.

S230: The backscatter end sends the second signal to the second communication device.

For S220 and S230, it is considered that positioning performance can be ensured by controlling a quantity of backscatter ends that simultaneously send signals. For example, a smaller quantity of backscatter ends that simultaneously send signals indicates better sensing-based positioning performance. At the same time, on-off keying (On-Off Keying, OOK) modulation information can be used to simplify control and distinguish different backscatter ends for signal transmission (like signal reflection). In this case, in this application, an orthogonal sequence (for example, the second reference signal modulation sequence) may be determined by the OOK modulation information to modulate the first signal, so that each of the backscatter ends can control the quantity of the backscatter ends that simultaneously send signals by periodically turning on (on) or off (off) based on modulation symbols of the backscatter ends, for example, minimize the quantity of the backscatter ends that simultaneously send signals, to implement interference cancellation and improve positioning performance.

In other words, the second reference signal modulation sequence mentioned in this application may be an orthogonal sequence (which is also referred to as a pilot sequence) determined based on the OOK modulation information. In other words, a second PRS modulation sequence symbol may be an OOK modulation signal.

It may be understood that the second reference signal modulation sequence is assumed to be the OOK modulation sequence, then, after receiving the first signal, the backscatter end can determine whether to reflect the first signal based on the OOK modulation sequence. For example, a backscatter end in on-duration (which corresponds to a modulation symbol "1" in the second reference signal modulation sequence) reflects the second signal, and a backscatter end in end off-duration (which corresponds to a modulation symbol "0" in the second reference signal modulation sequence) is in a silent state to perform energy harvesting, like battery energy collection, and does not perform signal reflection at this time.

Correspondingly, since the second communication device knows a second reference signal sequence adopted by each of the backscatter ends, the second communication device can process a received target signal (addition and subtraction operation, and the like) by using an orthogonal characteristic of the second reference signal sequence to locate the first communication device, the second communication device, or the target backscatter end, and the target backscatter end is any one of at least one backscatter end.

For example, refer to FIG. 1b again. The target signal received by the second communication device may include one or more of the first signal (which is also referred to as a diameter signal) from the first communication device, the second signal (which is also referred to as a reflection signal) from the backscatter end, an interference signal from the unknown reflector, and an additive white Gaussian noise (Additive white Gaussian noise, AWGN) signal. Then, the second communication device can process the received target signal based on the orthogonal characteristic of the second reference signal modulation sequence to eliminate the interference signal and locate the first communication device, the second communication device, or the target backscatter end.

It should be noted that, similar to the first reference signal modulation sequence described above, the second reference signal modulation sequence may be a PRS modulation sequence, an SRS modulation sequence, a CSI-RS modulation sequence, a DMRS modulation sequence, and the like. Correspondingly, the second signal may alternatively be a PRS, an SRS, a CSI-RS, a DMRS, and the like. This is not limited herein.

In addition, as an implementation, the second reference signal modulation sequence may be an orthogonal sequence determined based on another signal like a frequency-shift keying (Frequency-shift keying, FSK) signal other than the orthogonal sequence determined based on the OOK modulation signal. This is not limited herein.

In this embodiment, a backscatter end modulates and sends a received first signal based on a second reference signal modulation sequence, to enable a second communication device to process a received target signal by utilizing an orthogonal characteristic of the second reference signal modulation sequence, to eliminate an interference signal, position a first communication device, a second communication device, or a target backscatter end, and improve the positioning precision.

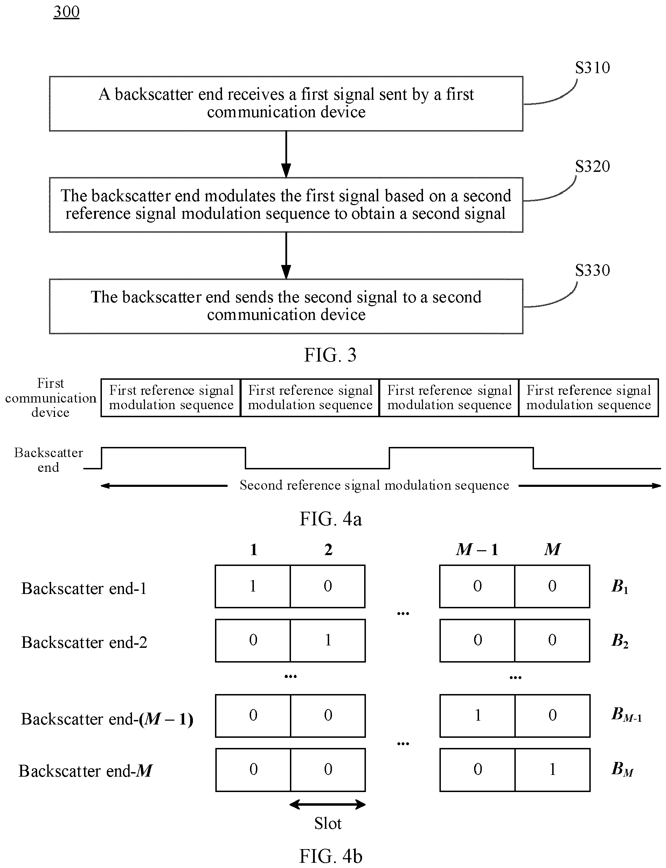

FIG. 3 is a schematic flowchart of a positioning method 300 provided by an example embodiment of this application. The method 300 may, but is not limited to, be executed by a first communication device, and in particular may be executed by hardware and/or software installed in the first communication device. In this embodiment, the method 300 may at least include the following steps:

S310: A backscatter end receives a first signal sent by a first communication device.

It may be understood that, for an implementation process of S310, reference may be made to relevant description in the method embodiment 200. Details are not repeated herein to avoid repetition.

S320: The backscatter end modulates the first signal based on a second reference signal modulation sequence to obtain a second signal.

The second reference signal modulation sequence is an orthogonal sequence determined based on OOK modulation information.

It may be understood that, for an implementation process of S320, reference may be made to relevant description in the method embodiment 200. In addition, as a possible implementation, the second reference signal modulation sequence may include M modulation symbols or M+1 modulation symbols, where M is related to a quantity of backscatter ends that participate in a positioning process, for example, M is equal to the quantity of backscatter ends that participate in the positioning process, that is, M is an integer greater than or equal to 1.

Based on this, in an implementation, a relationship between a modulation time length corresponding to a first reference signal modulation sequence and a modulation time length corresponding to the second reference signal modulation sequence is M+1 times, for example, as shown in FIG. 4a. Further, it can be understood that, if the first reference signal modulation sequence includes N symbols, a sequence length of a signal (for example, the second signal) modulated by the first reference signal modulation sequence and the second reference signal modulation sequence may be $N \times (M + 1)$. For convenience of description, a modulation time length of the second reference signal modulation sequence in this embodiment is equal to a length of one time unit, for example, on-off switching of the backscatter end is performed on a per-time-unit basis. The time unit may be a slot (slot), a symbol, a subframe, a frame, and the like. This is not limited herein.

Further, in this embodiment, the second reference signal modulation sequence may be pre-configured in the backscatter end or may be obtained from a network side device by the backscatter end. For example, a process of the backscatter end obtaining the second reference signal modulation sequence from the network side device is described herein in conjunction with Manner 1 and Manner 2 below, and content is as follows:

Manner 1: The backscatter end obtains the second reference signal modulation sequence from the network side device, where the second reference signal modulation sequence is selected by the network side device from a plurality of row vectors included in a first modulation matrix based on identification information of the backscatter end.

Second reference signal modulation sequences selected by the network side device for all backscatter ends may be partially the same or different. In other words, the second reference signal modulation sequences adopted by the different backscatter ends may be the same or different. It should be noted that, in Manner 1, because the network side device needs to indicate, based on identification information (ID) of the backscatter end, the second reference signal modulation sequence to each backscatter end, each backscatter end needs to indicate an ID of the backscatter end to the network side device before a positioning or sensing operation.

Manner 2: The backscatter end obtains the first modulation matrix from the network side device, and selects the second reference signal modulation sequence from the plurality of row vectors included in the first modulation matrix based on the identification information of the backscatter end.

Similar to Manner 1, in Manner 2, when each backscatter end selects a second reference signal modulation sequence based on the identification information of the backscatter end, second reference signal modulation sequences selected by different backscatter ends may be the same or different. In other words, the second reference signal modulation sequences adopted by the different backscatter ends may be the same or different.

It should be noted that, in the foregoing mentioned Manner 1 and Manner 2, if a positioning scenario is a UU uplink positioning scenario, the network side device can be a second communication device. If a positioning scenario is a UU downlink positioning scenario, the network side device can be the first communication device. If a positioning scenario is an SL positioning scenario, the network side is a network side device that provides services to the first communication device and/or the second communication device and/or the backscatter end. This is not limited herein.

In addition, if the second reference signal modulation sequence is selected or determined by the backscatter end from a modulation vector, the backscatter end needs to report the selected or determined second reference signal modulation sequence to the network side device, to ensure synchronization of information between the backscatter end and the network side device, and further determine smooth progress of a positioning process.

Further, based on the foregoing content, that there is no information interaction between backscatter ends in a positioning scenario is considered. Then, backscatter ends having identical second reference signal modulation sequences may conflict with each other. In this case, in this application, "0" and "1" may be used to control whether each backscatter end reflects a second signal. For example, a second reference signal modulation sequence corresponding to a backscatter end 1 is [1 0 1 0 1], and a second reference signal modulation sequence corresponding to a backscatter end 2 is [0 1 0 1 0], where "1" indicates that a backscatter end sends a signal of the backscatter end in a corresponding time unit (for example, a slot), and "0" indicates that the backscatter end turns off sending a signal in a corresponding time unit (for example, a slot). This avoids possible collisions between backscatter ends. It should be noted that, elements in the second reference signal modulation sequence should remain sufficiently sparse. For example, most elements are zero to reduce the possibility of collisions.

Based on this, in an implementation, it is assumed that there are M backscatter ends in the positioning scenario. Then, to eliminate interference between the backscatter ends, a characteristic of the second reference signal modulation sequence may be as follows: Only one first element of elements in the second reference signal modulation sequence is 1, and all second elements other than the first element are 0. That is, only one backscatter end in each time unit is controlled to reflect the second signal.

Corresponding to the second reference signal modulation sequence, for the plurality of row vectors in the first modulation matrix, a first element in each of the row vectors is 1, a second element other than the first element is 0, and a position of the first element in each of the row vectors is different. For example, the first modulation matrix B may be as follows:

$$
B=\begin{bmatrix} B_1 \\ B_2 \\ \vdots \\ B_M \end{bmatrix} = \begin{bmatrix} b_{1,1} & b_{1,2} & \cdots & b_{1,M+1} \\ b_{2,1} & b_{2,2} & \cdots & b_{2,M+1} \\ \vdots & \vdots & \ddots & \vdots \\ b_{M,1} & b_{M,2} & \cdots & b_{M,M+1} \end{bmatrix} = \begin{bmatrix} 1 & 0 & \cdots & 0 \\ 0 & 1 & \cdots & 0 \\ \vdots & \vdots & \ddots & \vdots \\ 0 & 0 & \cdots & 1 \end{bmatrix},
$$

where M is an integer greater than or equal to 1, and it is understood that a length of the second reference signal modulation sequence is M.

It should be noted that, if the network side device (for example, a gNB) is capable of scheduling which second reference signal modulation sequence should be used by a surrounding backscatter end, then each of the M backscatter ends can correspond to a row vector in the first modulation matrix B (for example, the second reference signal modulation sequence). For example, a backscatter end 1 corresponds to B 1, a backscatter end 2 corresponds to B2,..., and a backscatter end M corresponds to BM (refer to FIG. 4b). Therefore, possible signal collisions among the backscatter ends can be effectively avoided, which is an ideal scheduling scenario.

It should be noted that although the interference between the backscatter ends can be completely eliminated, considering that the second communication device simultaneously receives the first signal and the second signal sent by at least one backscatter end in each time unit, and strength of the first signal received by the second communication device is far greater than strength of the second signal, impact on positioning of the first communication device is not great, but impact on positioning of the backscatter end is great.

Therefore, to further improve positioning precision, a third element "0" can be added to the second reference signal modulation sequence corresponding to each backscatter end, so that each backscatter end does not send the second signal at the same time in a designated time unit. That is, for the first modulation matrix, each of the row vectors further includes a third element, and a position of the third element in each of the row vectors is the same. For example, when the third element is at a first position in the row vector, the first modulation matrix B may be as follows:

$$B = \begin{bmatrix} B_1 \\ B_2 \\ \vdots \\ B_M \end{bmatrix} = \begin{bmatrix} b_{1,1} & b_{1,2} & \cdots & b_{1,M+1} \\ b_{2,1} & b_{2,2} & \cdots & b_{2,M+1} \\ \vdots & \vdots & \ddots & \vdots \\ b_{M,1} & b_{M,2} & \cdots & b_{M,M+1} \end{bmatrix} = \begin{bmatrix} 0 & 1 & \cdots & 0 \\ 0 & 0 & \cdots & 0 \\ \vdots & \vdots & \ddots & \vdots \\ 0 & 0 & \cdots & 1 \end{bmatrix}.$$

M is an integer greater than or equal to 1.

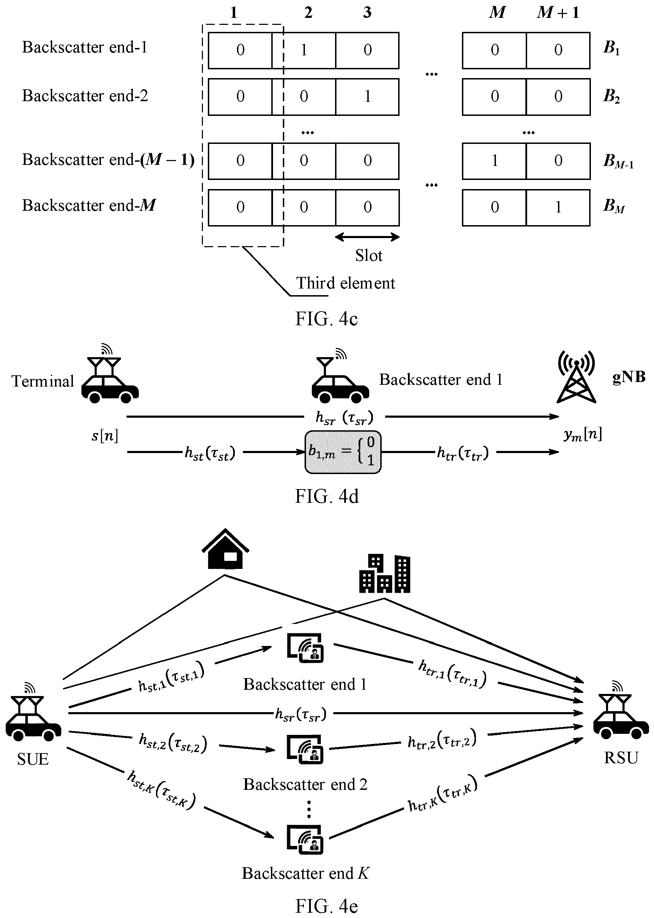

It may be understood that, as shown in FIG. 4c, the length of the second reference signal modulation sequence is M+1 due to addition of the third element in the row vector. In addition, as long as it is ensured that all the backscatter ends simultaneously do not send the second signal in a specified time unit, in addition to being located at the first position, the third element may alternatively be in any column in the first modulation matrix B as shown in FIG. 4c.

S330: The backscatter end sends the second signal to the second communication device.

It may be understood that, for an implementation process of S330, reference may be made to relevant description in the method embodiment 200. Details are not repeated herein to avoid repetition.

It should be noted that, when the second communication device receives the target signal, the second communication device can locate the first communication device, the second communication device, or the target backscatter end based on the target signal. The target signal includes at least a first signal sent by a first communication device and/or a second signal sent by at least one backscatter end. Therefore, in an implementation, a process of locating the first communication device by the second communication device based on the target signal may include:

The second communication device locates the first communication device based on a first target signal received in a first time unit, where all the backscatter ends do not perform signal transmission in the first time unit. The first target signal $y_1[n]$ is shown as Formula (1).

$$y_1[n] = h_{sr}s[n] + \sum_{j=1}^{J} \alpha_j h_{st,j}^{(o)} h_{tr,j}^{(o)} s[n] + w_1[n] \qquad (1)$$

Herein, $h_{sr}$ is a channel response between the first communication device and the second communication device, $\alpha_j$ is an attenuation coefficient of an $j$ th unknown reflector that includes a radar cross section (Radar Cross Section, RCS), $h_{st,j}^{(o)}$ is a channel response between the first communication device and the $j$ th unknown reflector, $h_{tr,j}^{(o)}$ is a channel response between the second communication device and the $j$ th unknown reflectors, $s[n]$ is the first signal, and $w_1[n]$ is an AWGN noise received in the first time unit.

In addition, the first time unit and a subsequent second time unit and third time unit may be slots (slot), symbols (symbol), frames (frame), subframes (subframe) and the like. This is not limited herein.

In another implementation, a process of locating the target backscatter end by the second communication device based on the target signal may include: If the target backscatter end is an mth backscatter end in the at least one backscatter end, the second communication device locates the mth backscatter end based on a second target signal received in a second time unit and a third target signal received in a third time unit, where

the mth backscatter end performs signal transmission in the second time unit, any backscatter end other than the mth backscatter end of the at least one backscatter end performs signal transmission in the third time unit, and the third time unit is earlier than the second time unit.

Based on this, when the third time unit is a 1st time unit and the second time unit is an (m+1)th time unit, the second communication device locates the mth backscatter end based on a difference between a third target signal received in the (m+1)th time unit and a second target signal received in the 1st time unit, where m is a positive integer.

In other words, for the mth backscatter end, to eliminate the interference of the first signal sent by the first communication device on the mth backscatter end, a subtraction operation may be performed on a second target signal $y_1[n]$ received in the second time unit and a third target signal $y_{m+1}[n]$ received in a (k+1)th time unit, to eliminate the interference of the first signal.

In this embodiment, it is assumed that

$$y_{m+1}[n] = h_{sr}s[n] + \alpha \sum_{k=1}^{M} h_{st,k} h_{tr,k} b_{k,m+1} s[n] + \sum_{j=1}^{J} \alpha_j h_{st,j}^{(o)} h_{tr,j}^{(o)} s[n] + w_{m+1}[n]$$

$$y_1[n] = h_{sr}s[n] + \alpha\sum_{k=1}^{M}h_{st,k}h_{tr,k}b_{k,1}s[n] + \sum_{j=1}^{J}\alpha_j h_{st,j}^{(o)}h_{tr,j}^{(o)}s[n] + w_1[n]$$

. Then, the difference $y'_m[n]$ can be shown as Formula (2).

$$\begin{aligned}y'_m[n] &= y_{m+1}[n] - y_1[n]\\ &= \alpha\sum_{k=1}^{M}\left(h_{st,k}h_{tr,k}b_{k,m+1} - h_{st,k}h_{tr,k}b_{k,1}\right)s[n] + w_{m+1}[n] - w_1[n] \qquad (2)\\ &= \alpha h_{st,k}h_{tr,k}s[n] + w_{m+1}[n] - w_1[n]\end{aligned}$$

Herein, $\alpha$ is a attenuation coefficient of an unknown reflector that includes an RCS, $h_{st,k}$ is a channel response between the first communication device and a kth backscatter end, $h_{tr,k}$ is a channel response between the second communication device and the kth backscatter end, $w_1[n]$ is an AWGN noise received in the 1st time unit, $w_{m+1}[n]$ is an AWGN noise received in the (m+1)th time unit, and s[n] is the first signal.

For example, it is assumed that there are five backscatter ends, namely, a backscatter end 1, a backscatter end 2, a backscatter end 3, a backscatter end 4, and a backscatter end 5, and the target backscatter end is the backscatter end 4. Then, the backscatter end 4 performs signal reflection in the second time unit, and one of the backscatter end 1, the backscatter end 2, the backscatter end 3, and the backscatter end 5 performs signal reflection in the third time unit. Correspondingly, regardless of a signal of an unknown reflector and an AWGN noise, the second target signal includes a first signal and a second signal sent from the backscatter end 4, and the third target signal includes at least the first signal and a second signal sent from a designated backscatter end (the backscatter end 1, the backscatter end 2, the backscatter end 3, or the backscatter end 5). Then, a difference operation is performed on the second target signal and the third target signal, to eliminate interference of the first signal and accurately locate the backscatter end 4.

Based on this, a positioning process of the second communication device is described below in combination with different positioning scenarios, and content is as follows:

Example 1

It is assumed that a positioning scenario is shown in FIG. 1b, namely, a UU uplink positioning scenario under a bistatic backscatter scenario, a time unit is a slot, the first communication device is a terminal, and the second communication device is a gNB. Then, a target signal received by the gNB in an mth slot can be shown as Formula (3).

$$y_m[n] = h_{sr}s[n] + \alpha\sum_{k=1}^{M}h_{st,k}h_{tr,k}b_{k,m}s[n] + \sum_{j=1}^{J}\alpha_j h_{st,j}^{(o)}h_{tr,j}^{(o)}s[n] + w_m[n] \qquad (3)$$

Herein, the terminal sends a signal s[n] in an nth OFDM symbol, where $|s[n]|^2 = 1$, the signal s[n] is received directly by the gNB signal through a channel response $h_{sr}$, and at the same time, the s[n] signal is received by the kth backscatter end through a channel response $h_{st,k}$. A first signal received by a kth backscatter terminal is modulated by a symbol $b_{k,m}$ in a second reference signal modulation sequence in a slot m, and is reflected to the gNB with a channel response $h_{tr,k}$, where $\alpha$ is a complex attenuation backscatter signal coefficient. In addition, $\alpha_j$ is an attenuation coefficient of a jth unknown object that includes an RCS, and $h_{st,j}^{(o)}$ and $h_{tr,j}^{(o)}$ are channel responses of the jth unknown reflector for the terminal and the gNB respectively. $w_m[n]$ is an AWGN noise received in the nth symbol with a mean value of zero and a noise power spectral density of $N_0$.

Based on this, if the backscatter end modulates and reflects the first signal by using a symbol $b_{k,1} = 0$ in the second reference signal modulation sequence, where $1 \le k \le M$, then, a target signal received by the gNB in a first slot can be shown as Formula (4).

$$y_1[n] = h_{sr}s[n] + \sum_{j=1}^{J}\alpha_j h_{st,j}^{(o)}h_{tr,j}^{(o)}s[n] + w_1[n] \qquad (4)$$

Herein, because a second signal sent by the backscatter end is not included in $y_1[n]$, the gNB may locate the terminal based on the received signal $y_1[n]$, for example, calculate a positioning parameter. It is worth noting that, according to Formula (4), it can be learned that, if the backscatter end does not reflect a signal, positioning performance of the terminal does not change.

In addition, if an interference signal $\sum_{j=1}^{J} \alpha_j h_{st,j}^{(o)} h_{tr,j}^{(o)} s[n]$ of the unknown reflector and an AWGN signal $w_1[n]$ is classified as a type of noise signal with a mean value of zero and a noise power spectral density of $\sigma^2$, an SNR $y_1[n]$ received by the gNB can be shown as Formula (5).

$$SNR^{(o)}[n] = \frac{|h_{sr}|^2}{\sigma^2} \qquad (5)$$

Further, for positioning of the mth backscatter end, to eliminate the interference of the first signal, a subtraction operation is performed on the target signal of the first slot and a ( $k + 1$ )th slot signal, and a difference can be shown as Formula (6).

$$y_m'[n] = y_{m+1}[n] - y_1[n]$$
$$= \alpha \sum_{k=1}^{M} \left( h_{st,k} h_{tr,k} b_{k,m+1} - h_{st,k} h_{tr,k} b_{k,1} \right) s[n] + w_{m+1}[n] - w_1[n] \qquad (6)$$
$$= \alpha h_{st,k} h_{tr,k} s[n] + w_{m+1}[n] - w_1[n]$$

That is, the gNB locates the mth backscatter end based on a signal $y_m'[n]$, for example, calculates a positioning parameter. It is worth noting that, according to Formula (6), it can be learned that, if interference between the terminal and the unknown reflector can be completely eliminated, positioning performance of the mth backscatter end can be greatly improved.

In addition, if a superimposed AWGN signal is classified as a noise signal with a mean value of zero and a noise power spectral density of $\sigma^2$, an SNR received by the gNB $y_m'[n]$ can be shown as Formula (7).

$$SNR^{(o)}[n] = \frac{\alpha^2 |h_{st} h_{tr}|^2}{2\sigma^2} \qquad (7)$$

Based on this, the following is a further explanation of a derivation process of the SNR formula mentioned above.

For simplicity, it is assumed that a positioning system includes a terminal (namely, a first communication device), two backscatter ends and a gNB (namely, second communication devices), and impact of any unknown reflector in the positioning system is not considered here. So, in an $n$th symbol, the terminal sends a first signal s[n] which is received directly by the gNB through a channel response $h_{sr}$, and is simultaneously received by a backscatter end 1 and a backscatter end 2 through channel responses $h_{st,1}$ and $h_{st,2}$ respectively. In a slot, a backscatter end 1 and a backscatter end 2 receives the first signal sent by the terminal, and the backscatter end modulates and reflects a signal (namely, a second signal) based on $b_{1,m}$ and $b_{2,m}$ in a second reference signal sequence, and reflects the signal separately to the gNB through channel responses $h_{tr,1}$ and $h_{tr,2}$ .

Herein, as shown in FIG. 4d, only a second reference signal modulation sequences with a length of 2 is considered, where $b_{1,m} = 0$ , and $b_{1,m+1} = 1$. Then, the target signal $y_m[n]$ received by the gNB in the slot is shown as Formula (8).

$$y_m[n] = h_{sr} s[n] + \alpha h_{st,1} h_{tr,1} b_{1,m} + w_m[n] \qquad (8)$$

Herein, $|s[n]|^2 = 1$. It is assumed that the first signal is modulated by using $b_{1,m} = 0$ and $b_{1,m+1} = 1$ in the slot $m$ and a slot $m+1$ respectively, and the received target signal is shown as Formula (9).

$$\begin{cases} y_m[n] = h_{sr}s[n] + w_m[n] \\ y_{m+1}[n] = h_{sr}s[n] + \alpha h_{st} \, h_{tr}s[n] + w_{m+1}[n] \end{cases} \tag{9}$$

To obtain a positioning signal of the terminal, the gNB can directly adopt $y_m[n]$, so the corresponding SNR can be shown as Formula (10).

$$SNR^{(o)}[n] = \frac{|h_{sr}|^2}{\sigma^2} \tag{10}$$

Correspondingly, the gNB can obtain a positioning signal of the backscatter end by calculating $y_{m+1}[n] - y_1[n]$, as shown in Formula (11).

$$y_{m+1}[n] - y_1[n] = \alpha h_{st} h_{tr} s[n] + w_{m+1}[n] - w_m[n] \tag{11}$$

Based on this, an SNR corresponding to the positioning signal of the backscatter end can be shown as Formula (12).

$$SNR^{(o)}[n] = \frac{\alpha^2 |h_{st} h_{tr}|^2}{2\sigma^2} \tag{12}$$

It is worth noting that, relative to the positioning signal of the terminal, the positioning signal of the backscatter end is obtained by subtracting received target signals. Therefore, an overall noise is doubled to 3dB.

Example 2

It is assumed that the positioning scenario is a sidelink positioning scenario as shown in FIG. 4e, namely, a bistatic positioning scenario under a bistatic backscatter scenario. A time unit is a slot. A first communication device is sidelink UE (Sidelink UE, SUE). A second communication device is a road side unit (Road Side Unit, RSU). Then, that it is difficult to find more than four RSUs around one SUE for the SUE is considered. Through another surrounding SUE, locating the SUE is also possible. However, due to mobility of the SUE, position accuracy of the SUE is very inaccurate. As a result, overall precision of sidelink positioning significantly decreases. To improve sidelink positioning precision, intensive deployment of RSUs is indispensable, but this greatly improves sidelink deployment costs.
In this regard, this application utilizes a backscatter characteristic to implement auxiliary positioning of the SUE. For example, refer to FIG. 4e again. It is assumed that there is SUE, one RSU, $K$ backscatter ends and $J$ unknown reflectors (Object), then, a target signal received by the RSU in a mth slot can be shown as Formula (13).

$$y_m[n] = h_{sr}(\tau_{sr})s[n] + \alpha \sum_{k=1}^{K} h_{st,k}(\tau_{st,k})h_{tr,k}(\tau_{tr,k})b_{k,m}s[n] + \sum_{j=1}^{J} \alpha_j h_{st,j}^{(o)} h_{tr,j}^{(o)} s[n] + w_m[n] \tag{13}$$

Herein, the SUE sends a positioning pilot reference signal $s[n]$ in a $n$th symbol, $s[n]$ is directly received by the RSU through a channel response $h_{sr}(\tau_{sr})$ ($\tau_{sr}$ is a channel delay ). At the same time, $s[n]$ is directly received by a $k$th backscatter end through a channel response $h_{st,k}(\tau_{st,k})$ ($\tau_{st,k}$ is a channel delay). A first signal received by the $k$th backscatter end is modulated by a symbol $b_{k,m}$ in a second reference signal modulation sequence in a slot $m$, and is reflected to the RSU through a channel response $h_{tr,k}(\tau_{tr,k})$ ($\tau_{tr,k}$ is a channel delay), where $\alpha$ is a complex attenuation backscatter signal coefficient. In addition, $\alpha_j$ is an attenuation coefficient of a $j$th unknown reflector that includes an RCS. $h_{st,j}^{(o)}$ and $h_{tr,j}^{(o)}$ are channel responses of the $j$th unknown reflector for the SUE and the RSU respectively. $w_m[n]$ is an AWGN noise received in the $n$th symbol with a mean value of zero and a noise power spectral density of $\sigma_0^2$.
An SUE positioning signal assisted by the backscatter end can be obtained from a sending signal of an $m$th backscatter end. For example, according to Formula (14), the SUE can be located by performing a subtraction operation on a ( $m$ + 1 )th slot signal and a first slot signal.

$$y'_m[n]=y_{m+1}[n]-y_1[n]=\alpha h_{st,m}(\tau_{st,m})h_{tr,k}(\tau_{tr,m})s[n]+w_{m+1}[n]-w_1[n] \qquad (14)$$

Through Formula (14), the RSU can calculate total delay time, namely, $\tau_{st,m}$ + $\tau_{tr,m}$, for a first signal sent by the SUE to reach the RSU after being reflected by the mth backscatter end.

It is assumed that a geographical position of each backscatter end is fixed, and if the RSU knows the geographical position of each backscatter end accurately in advance, the RSU can accurately know in advance delay time, namely, $\tau_{tr,m}$, for a second signal sent by the mth backscatter end to reach the RSU. By performing a subtraction calculation on total delay time $\tau_{st,m}$ + $\tau_{tr,m}$, the RSU can obtain a delay, namely, $\tau_{st,m}$, of the first signal sent by the SUE to the mth backscatter terminal. If each RSU deploys more than four backscatter ends in advance for auxiliary SUE positioning (that is, $K \geq 4$), only one RSU is needed to accurately locate the SUE.

Certainly, in addition to that the second communication device directly performs positioning based on the target signal mentioned, considering that there is no information interaction between the backscatter ends, it is inevitable that reflected signals of the backscatter ends collide at the same time (for example, the different backscatter ends select same second reference signal modulation sequences). Therefore, if reflected signals (namely, second signals) of a small quantity of backscatter ends collide, the second communication device can distinguish and determine IDs and corresponding coordinate positions of the backscatter ends through a positioning algorithm. However, if the reflected signals (namely, the second signals) of the small quantity of backscatter ends collide, the second communication device may not be able to effectively resolve collisions among the reflected signals from the backscatter ends, and thus cannot implement effective positioning. Alternatively, the second communication device may not be able to locate at least one of the first communication device, the second communication device, and the at least one backscatter end based on the first signal and/or at least one second signal, possibly due to constraints in computing power or hardware capabilities of the second communication device.

In this case, the second communication device may obtain at least one of a first measurement parameter, a second measurement parameter, and a third measurement parameter based on the first signal and/or at least one second signal, and send the at least one of the first measurement parameter, the second measurement parameter, and the third measurement parameter to a sensing function (SF). The SF classifies, through unsupervised learning (Unsupervised Learning) of an expectation maximization (EM) algorithm (K-Means Clustering), received positioning data (for example, the third measurement parameter) corresponding to the backscatter end. Then, SF estimates a position/velocity of the backscatter end by using a positioning algorithm. It is worth noting that, EM is mainly used in a scenario in which backscatter ends collide with each other.

For example, the second communication device may simultaneously obtain position information of a plurality of backscatter ends by using a specific positioning algorithm (for example, MUSIC). In this case, if the second communication device is unable to determine a position of the backscatter end and information related to an ID of the backscatter end due to collision between the backscatter ends, the second communication device can send the at least one of the first measurement parameter, the second measurement parameter, and the third measurement parameters to the SF, so that the SF can comprehensively determine the position information of the backscatter end and the ID information of the backscatter end.

It should be noted that, the first measurement parameter is used for locating the first communication device. The second measurement parameter is used for locating the second communication device. The third measurement parameter is used for locating the at least one backscatter end. For example, the first measurement parameter, the second measurement parameter, and the third measurement may include, but are not limited to, a time difference of arrival (Time Difference of Arrival, TDOA), time of arrival (Time of Arrival, ToA) parameters, and the like.

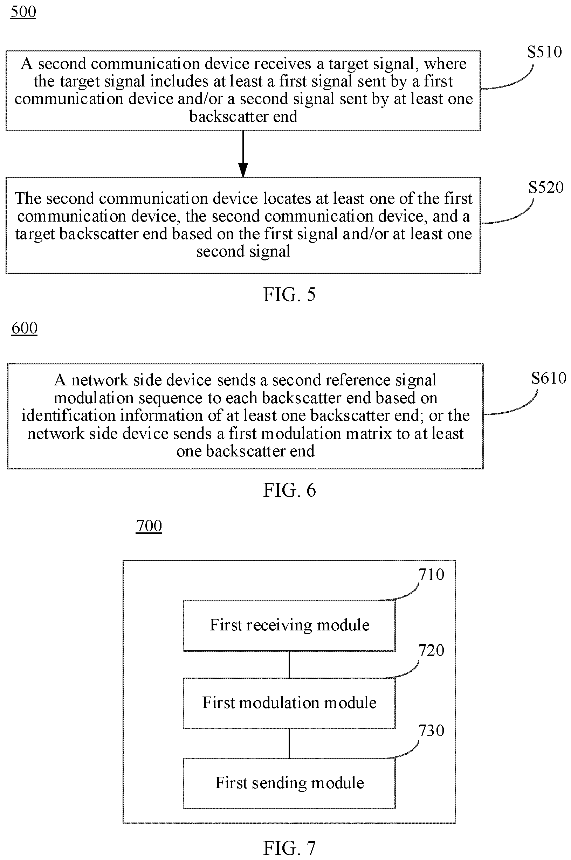

FIG. 5 is a schematic flowchart of a positioning method 300 provided by an example embodiment of this application. The method 300 may, but is not limited to, be executed by a second communication device, and in particular may be executed by hardware and/or software installed in the second communication device. In this embodiment, the method 300 may at least include the following steps:

S510: A second communication device receives a target signal, where the target signal includes at least a first signal sent by a first communication device and/or a second signal sent by at least one backscatter end.

S520: The second communication device locates at least one of the first communication device, the second communication device, and a target backscatter end based on the first signal and/or at least one second signal.

The target backscatter end is any one of the at least one backscatter end, and the second signal is obtained by modulating the first signal based on a second reference signal modulation sequence, and the second reference signal modulation sequence is an orthogonal sequence determined based on on-off keying OOK modulation information.

Optionally, the second reference signal modulation sequence includes M or M+1 modulation symbols, M is related to a quantity of backscatter ends participating in a positioning process, and M is an integer greater than or equal to 1. A relationship between a modulation time length corresponding to a first reference signal modulation sequence and a modulation time length corresponding to the second reference signal modulation sequence is M or M+1 times, and the first signal is obtained based on the first reference signal modulation sequence.

Optionally, at least one of the first reference signal modulation sequence and the second reference signal modulation sequence includes a positioning reference signal modulation sequence.

Optionally, a step the second communication device locating the first communication device based on the first signal and/or the at least one second signal includes: The second communication device locates the first communication device based on a first target signal received in a first time unit, where all the backscatter ends do not perform signal transmission in the first time unit.

$$y_1[n] = h_{sr}s[n] + \sum_{j=1}^{J} \alpha_j h_{st,j}^{(o)} h_{tr,j}^{(o)} s[n] + w_1[n]$$

Optionally, the first target signal $y_1[n]$ is: , where $h_{sr}$ is a channel response between the first communication device and the second communication device, $\alpha_j$ is an attenuation coefficient of a $j$ th unknown reflector that includes a radar cross section RCS, $h_{st,j}^{(o)}$ is a channel response between the first communication device and the $j$ th unknown reflector, $h_{tr,j}^{(o)}$ is a channel response between the second communication device and the $j$ th unknown reflector, $s[n]$ is the first signal, and $w_1[n]$ is an AWGN noise received in the first time unit.

Optionally, a step of the second communication device locating the target backscatter end based on the first signal and/or the at least one second signal includes: If the target backscatter end is an mth backscatter end in the at least one backscatter end, the second communication device locates the mth backscatter end based on a second target signal received in a second time unit and a third target signal received in a third time unit, where the mth backscatter end performs signal transmission in the second time unit, any backscatter end other than the mth backscatter end of the at least one backscatter end performs signal transmission in the third time unit, and the third time unit is earlier than the second time unit.

Optionally, the step of the second communication device locating the mth backscatter end based on a second target signal received in a second time unit and a third target signal received in a third time unit includes: When the third time unit is a 1st time unit and the second time unit is an (m+1)th time unit, the second communication device locates the mth backscatter end based on a difference between a third target signal received in the (m+1)th time unit and a second target signal received in the 1st time unit, where m is a positive integer.

Optionally, the difference $y_m'[n]$ is:

$$y_m'[n] = y_{m+1}[n] - y_1[n]$$
$$= \alpha \sum_{k=1}^{M} \left( h_{st,k}h_{tr,k}b_{k,m+1} - h_{st,k}h_{tr,k}b_{k,1} \right)s[n] + w_{m+1}[n] - w_1[n],$$
$$= \alpha h_{st,k}h_{tr,k}s[n] + w_{m+1}[n] - w_1[n]$$

where
$y_{m+1}[n]$ represents the third target signal, $y_1[n]$ represents the second target signal, $\alpha$ is a complex attenuation backscatter signal coefficient, $h_{st,k}$ is a channel response between the first communication device and a kth backscatter end, $h_{tr,k}$ is a channel response between the second communication device and the kth backscatter end, $w_1[n]$ is an AWGN noise received in the 1st time unit, $w_{m+1}[n]$ is an AWGN noise received in the (m+1)th time unit, and $s[n]$ is the first signal.

Optionally, a step of the second communication device locating the first communication device and/or the at least one backscatter end based on the first signal and/or the at least one second signal includes: The second communication device obtains at least one of a first measurement parameter, a second measurement parameter, and a third measurement parameter based on the first signal and/or the at least one second signal; and the second communication device sends the at least one of the first measurement parameter, the second measurement parameter, and the third measurement parameter to a sensing function, where the first measurement parameter is used for locating the first communication device; the second measurement parameter is used for locating the second communication device; and the third measurement parameter is used for locating the at least one backscatter end.

Optionally, in a case that a positioning scenario is a UU uplink positioning scenario, the first communication device is a terminal, and the second communication device is a network side device; in a case that the positioning scenario is a UU downlink positioning scenario, the first communication device is the network side device, and the second communication device is the terminal; and in a case that the positioning scenario is a sidelink positioning scenario, both the first communication device and the second communication device are terminals.

It may be understood that, for an implementation process of a method embodiment 600, reference may be made to the relevant description in the method embodiment 200 and/or the method embodiment 300 to achieve the same or corresponding technical effects. Details are not repeated herein to avoid repetition.

FIG. 6 is a schematic flowchart of a positioning method 600 provided by an example embodiment of this application. The method 600 may, but is not limited to, be executed by a network side device, and in particular may be executed by hardware and/or software installed in the network side device. In this embodiment, the method 600 may at least include the following steps:

S610: A network side device sends a second reference signal modulation sequence to each backscatter end based on identification information of at least one backscatter end; or the network side device sends a first modulation matrix to at least one backscatter end, where the second reference signal modulation sequence is an orthogonal sequence determined based on OOK modulation information, and the second reference signal modulation sequence is any one of a plurality of row vectors included in the first modulation matrix.

Optionally, the second reference signal modulation sequence includes at least a positioning reference signal modulation sequence.

Optionally, for the at least one backscatter end, at least a portion of the second reference signal modulation sequence corresponding to each of the backscatter ends is different.

Optionally, for the plurality of row vectors in the first modulation matrix, a first element in each of the row vectors is 1, a second element other than the first element is 0, and a position of the first element in each of the row vectors is different.

Optionally, the first modulation matrix B is:

$$B=\begin{bmatrix} B_1 \\ B_2 \\ \vdots \\ B_M \end{bmatrix}=\begin{bmatrix} b_{1,1} & b_{1,2} & \cdots & b_{1,M+1} \\ b_{2,1} & b_{2,2} & \cdots & b_{2,M+1} \\ \vdots & \vdots & \ddots & \vdots \\ b_{M,1} & b_{M,2} & \cdots & b_{M,M+1} \end{bmatrix}=\begin{bmatrix} 1 & 0 & \cdots & 0 \\ 0 & 1 & \cdots & 0 \\ \vdots & \vdots & \ddots & \vdots \\ 0 & 0 & \cdots & 1 \end{bmatrix},$$

where M is an integer greater than or equal to 1.

Optionally, each of the row vectors further includes a third element, and a position of the third element in each of the row vectors is the same.

Optionally, the first modulation matrix B is:

$$B=\begin{bmatrix} B_1 \\ B_2 \\ \vdots \\ B_M \end{bmatrix}=\begin{bmatrix} b_{1,1} & b_{1,2} & \cdots & b_{1,M+1} \\ b_{2,1} & b_{2,2} & \cdots & b_{2,M+1} \\ \vdots & \vdots & \ddots & \vdots \\ b_{M,1} & b_{M,2} & \cdots & b_{M,M+1} \end{bmatrix}=\begin{bmatrix} 0 & 1 & \cdots & 0 \\ 0 & 0 & \cdots & 0 \\ \vdots & \vdots & \ddots & \vdots \\ 0 & 0 & \cdots & 1 \end{bmatrix},$$

where M is an integer greater than or equal to 1.

It may be understood that, for an implementation process of a method embodiment 600, reference may be made to the relevant description in the method embodiment 200 and/or the method embodiment 300 to achieve the same or corresponding technical effects. Details are not repeated herein to avoid repetition.

In addition, in the positioning method 200 to the positioning method 600 provided in embodiments of this application, an executive body may be a positioning apparatus. In embodiments of this application, that the positioning apparatus performs the positioning method is used as an example to describe the positioning apparatus provided by embodiments of this application.

FIG. 7 is a schematic diagram of a structure of a positioning apparatus according to an example embodiment of this application. The positioning apparatus includes: a first receiving module 710, configured to receive a first signal sent by a first communication device; a first modulation module 720, configured to modulate the first signal based on a second reference signal modulation sequence to obtain a second signal; and a first sending module 730, configured to send the second signal to a second communication device, where the second reference signal modulation sequence is an orthogonal sequence determined based on on-off keying OOK modulation information.

Optionally, the second reference signal modulation sequence includes M or M+1 modulation symbols, M is related to a quantity of backscatter ends participating in a positioning process, and M is an integer greater than or equal to 1. A relationship between a modulation time length corresponding to a first reference signal modulation sequence and a modulation time length corresponding to the second reference signal modulation sequence is M or M+1 times, and the first signal is obtained based on the first reference signal modulation sequence.

Optionally, at least one of the first reference signal modulation sequence and the second reference signal modulation sequence includes a positioning reference signal modulation sequence.

Optionally, the first receiving module 710 may be further used for any one of the following: obtaining the second reference signal modulation sequence from the network side device, where the second reference signal modulation sequence is selected by the network side device from a plurality of row vectors included in a first modulation matrix based on identification information of the backscatter end; and obtaining the first modulation matrix from the network side device, and selecting the second reference signal modulation sequence from the plurality of row vectors included in the first modulation matrix based on the identification information of the backscatter end.

Optionally, for the plurality of row vectors in the first modulation matrix, a first element in each of the row vectors is 1, a second element other than the first element is 0, and a position of the first element in each of the row vectors is different.

Optionally, the first modulation matrix B is:

$$B = \begin{bmatrix} B_1 \\ B_2 \\ \vdots \\ B_M \end{bmatrix} = \begin{bmatrix} b_{1,1} & b_{1,2} & \cdots & b_{1,M+1} \\ b_{2,1} & b_{2,2} & \cdots & b_{2,M+1} \\ \vdots & \vdots & \ddots & \vdots \\ b_{M,1} & b_{M,2} & \cdots & b_{M,M+1} \end{bmatrix} = \begin{bmatrix} 1 & 0 & \cdots & 0 \\ 0 & 1 & \cdots & 0 \\ \vdots & \vdots & \ddots & \vdots \\ 0 & 0 & \cdots & 1 \end{bmatrix},$$

where M is an integer greater than or equal to 1.

Optionally, each of the row vectors further includes a third element, and a position of the third element in each of the row vectors is the same.

Optionally, the first modulation matrix B is:

$$B = \begin{bmatrix} B_1 \\ B_2 \\ \vdots \\ B_M \end{bmatrix} = \begin{bmatrix} b_{1,1} & b_{1,2} & \cdots & b_{1,M+1} \\ b_{2,1} & b_{2,2} & \cdots & b_{2,M+1} \\ \vdots & \vdots & \ddots & \vdots \\ b_{M,1} & b_{M,2} & \cdots & b_{M,M+1} \end{bmatrix} = \begin{bmatrix} 0 & 1 & \cdots & 0 \\ 0 & 0 & \cdots & 0 \\ \vdots & \vdots & \ddots & \vdots \\ 0 & 0 & \cdots & 1 \end{bmatrix},$$

where M is an integer greater than or equal to 1.

Optionally, in a case that a positioning scenario is a UU uplink positioning scenario, the first communication device is a terminal, and the second communication device is a network side device; in a case that the positioning scenario is a UU downlink positioning scenario, the first communication device is the network side device, and the second communication device is the terminal; and in a case that the positioning scenario is a sidelink positioning scenario, both the first communication device and the second communication device are terminals.

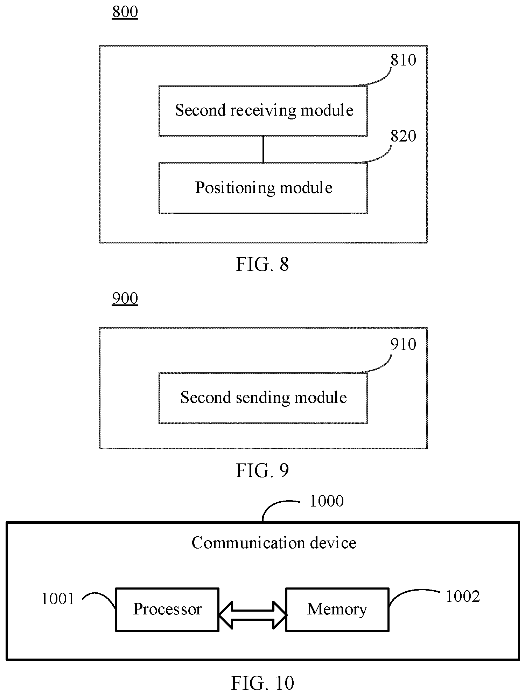

FIG. 8 is a schematic diagram of a structure of a positioning apparatus 800 according to an example embodiment of this application. The positioning apparatus 800 includes: a second receiving module 810, configured to receive a target signal, where the target signal includes at least a first signal transmitted by a first communication device and/or a second signal transmitted by at least one backscatter end; and a positioning module 820, configured to locate at least one of the first communication device, a second communication device and a target backscatter end based on the first signal and/or at least one second signal, where the target backscatter end is any one of the at least one backscatter end, and the second signal is obtained by modulating the first signal based on a second reference signal modulation sequence, and the second reference signal modulation sequence is an orthogonal sequence determined based on on-off keying OOK modulation information.

Optionally, the second reference signal modulation sequence includes M or M+1 modulation symbols, M is related to a quantity of backscatter ends participating in a positioning process, and M is an integer greater than or equal to 1. A relationship between a modulation time length corresponding to a first reference signal modulation sequence and a modulation time length corresponding to the second reference signal modulation sequence is M or M+1 times, and the first signal is obtained based on the first reference signal modulation sequence.

Optionally, at least one of the first reference signal modulation sequence and the second reference signal modulation sequence includes a positioning reference signal modulation sequence.

Optionally, a step the positioning module 820 locating the first communication device based on the first signal and/or the at least one second signal includes: The second communication device locates the first communication device based on a first target signal received in a first time unit, where all the backscatter ends do not perform signal transmission in the first time unit.

$$y_1[n] = h_{sr}s[n] + \sum_{j=1}^{J} \alpha_j h_{st,j}^{(o)} h_{tr,j}^{(o)} s[n] + w_1[n]$$

Optionally, the first target signal $y_1[n]$ is:                          , where $h_{sr}$ is a channel response between the first communication device and the second communication device, $\alpha_j$ is an attenuation coefficient of a $j$ th unknown reflector that includes a radar cross section RCS, $h_{st,j}^{(o)}$ is a channel response between the first communication device and the $j$ th unknown reflector, $h_{tr,j}^{(o)}$ is a channel response between the second communication device and the $j$ th unknown reflector, $s[n]$ is the first signal, and $w_1[n]$ is an AWGN noise received in the first time unit.

Optionally, a step of the positioning module 820 locating the target backscatter end based on the first signal and/or the at least one second signal includes: If the target backscatter end is an mth backscatter end in the at least one backscatter end, the second communication device locates the mth backscatter end based on a second target signal received in a second time unit and a third target signal received in a third time unit, where the mth backscatter end performs signal transmission in the second time unit, any backscatter end other than the mth backscatter end of the at least one backscatter end performs signal transmission in the third time unit, and the third time unit is earlier than the second time unit.

Optionally, the step of the positioning module 820 locating the mth backscatter end based on a second target signal received in a second time unit and a third target signal received in a third time unit includes: When the third time unit is a 1st time unit and the second time unit is an (m+1)th time unit, the second communication device locates the mth backscatter end based on a difference between a third target signal received in the (m+1)th time unit and a second target signal received in the 1st time unit, where m is a positive integer.

Optionally, the difference $y'_m[n]$ is:

$$y'_m[n] = y_{m+1}[n] - y_1[n]$$
$$= \alpha \sum_{k=1}^{M} \left( h_{st,k} h_{tr,k} b_{k,m+1} - h_{st,k} h_{tr,k} b_{k,1} \right) s[n] + w_{m+1}[n] - w_1[n],$$
$$= \alpha h_{st,k} h_{tr,k} s[n] + w_{m+1}[n] - w_1[n]$$

where $y_{m+1}[n]$ represents the third target signal, $y_1[n]$ represents the second target signal, $\alpha$ is a complex attenuation backscatter signal coefficient, $h_{st,k}$ is a channel response between the first communication device and a kth backscatter end, $h_{tr,k}$ is a channel response between the second communication device and the kth backscatter end, $w_1[n]$ is an AWGN noise received in the 1st time unit, $w_{m+1}[n]$ is an AWGN noise received in the (m+1)th time unit, and $s[n]$ is the first signal.

Optionally, a step of the positioning module 820 locating the first communication device and/or the at least one backscatter end based on the first signal and/or the at least one second signal includes: The second communication device obtains at least one of a first measurement parameter, a second measurement parameter, and a third measurement parameter based on the first signal and/or the at least one second signal; and the second communication device sends the at least one of the first measurement parameter, the second measurement parameter, and the third measurement parameter to a sensing function, where the first measurement parameter is used for locating the first communication device; the second measurement parameter is used for locating the second communication device; and the third measurement parameter is used for locating the at least one backscatter end.

Optionally, in a case that a positioning scenario is a UU uplink positioning scenario, the first communication device is a terminal, and the second communication device is a network side device; in a case that the positioning scenario is a UU downlink positioning scenario, the first communication device is the network side device, and the second communication device is the terminal; and in a case that the positioning scenario is a sidelink positioning scenario, both the first communication device and the second communication device are terminals.

FIG. 9 is a schematic diagram of a structure of a positioning apparatus according to an example embodiment of this application. The positioning apparatus includes a second sending module 910, configured to send, based on identification information of at least one backscatter end, a second reference signal modulation sequence to each backscatter end; or a second sending module 910, configured to send a first modulation matrix to at least one backscatter end, where the second reference signal modulation sequence is an orthogonal sequence determined based on on-off keying OOK modulation information, and the second reference signal modulation sequence is any one of a plurality of row vectors included in the first modulation matrix.

Optionally, the second reference signal modulation sequence includes at least a positioning reference signal modulation sequence.

Optionally, for the at least one backscatter end, at least a portion of the second reference signal modulation sequence corresponding to each of the backscatter ends is different.

Optionally, for the plurality of row vectors in the first modulation matrix, a first element in each of the row vectors is 1, a second element other than the first element is 0, and a position of the first element in each of the row vectors is different.

Optionally, the first modulation matrix B is:

$$\mathbf{B}=\begin{bmatrix} B_1 \\ B_2 \\ \vdots \\ B_M \end{bmatrix}=\begin{bmatrix} b_{1,1} & b_{1,2} & \cdots & b_{1,M+1} \\ b_{2,1} & b_{2,2} & \cdots & b_{2,M+1} \\ \vdots & \vdots & \ddots & \vdots \\ b_{M,1} & b_{M,2} & \cdots & b_{M,M+1} \end{bmatrix}=\begin{bmatrix} 1 & 0 & \cdots & 0 \\ 0 & 1 & \cdots & 0 \\ \vdots & \vdots & \ddots & \vdots \\ 0 & 0 & \cdots & 1 \end{bmatrix},$$

where M is an integer greater than or equal to 1.

Optionally, each of the row vectors further includes a third element, and a position of the third element in each of the row vectors is the same.

Optionally, the first modulation matrix B is:

$$\mathbf{B}=\begin{bmatrix} B_1 \\ B_2 \\ \vdots \\ B_M \end{bmatrix}=\begin{bmatrix} b_{1,1} & b_{1,2} & \cdots & b_{1,M+1} \\ b_{2,1} & b_{2,2} & \cdots & b_{2,M+1} \\ \vdots & \vdots & \ddots & \vdots \\ b_{M,1} & b_{M,2} & \cdots & b_{M,M+1} \end{bmatrix}=\begin{bmatrix} 0 & 1 & \cdots & 0 \\ 0 & 0 & \cdots & 0 \\ \vdots & \vdots & \ddots & \vdots \\ 0 & 0 & \cdots & 1 \end{bmatrix},$$

where M is an integer greater than or equal to 1.

The positioning apparatus in this embodiment of this application may be a communication device, for example, a communication device having an operating system, for example, a terminal or a network side device. For example, the terminal may include but not be limited to a type of the terminal 11 enumerated above, and the network side device may include but not be limited to a type of the network side device 12 enumerated above. This is not specifically limited in embodiments of this application.

The positioning apparatus 700 to the positioning apparatus 900 provided in embodiments of this application can implement each process implemented in the method embodiments of FIG. 2 to FIG. 6 and achieve the same technical effects. Details are not repeated herein to avoid repetition.

Optionally, as shown in FIG. 10, an embodiment of this application further provides a communication device 1000, including a processor 1001 and a memory 1002. The memory 1002 stores a program or instructions executable on the processor 1001. For example, when the communication device 1000 is a terminal, when the program or instructions are executed by the processor 1001, each step of the foregoing positioning method embodiment is implemented, and the same technical effects can be achieved. When the communication device 1000 is a network side device, when the program or instructions are executed by the processor 1001, each step of the foregoing positioning method embodiment is implemented, and the same technical effects can be achieved. Details are not repeated herein to avoid repetition.

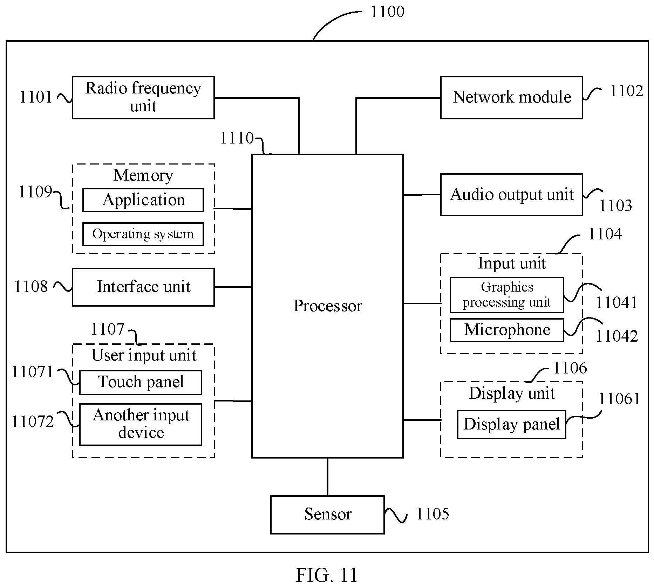

In an implementation, the communication device 1000 may be a terminal. The terminal may include a processor and a communication interface. The communication interface is coupled to the processor. The processor is configured to run the program or instructions to implement the steps of methods described in the method embodiment 200 to the method embodiment 500. The terminal embodiment corresponds to the method embodiments of the first communication device and the second communication device. Each implementation process and implementation of the method embodiment can be applied to the terminal embodiment and can achieve the same technical effects. Specifically, FIG. 11 is a schematic diagram of a hardware structure of a terminal according to an embodiment of this application.

The terminal 1100 includes, but is not limited to: a least some components of a radio frequency unit 1101, a network module 1102, an audio output unit 1103, an input unit 1104, a sensor 1105, a display unit 1106, a user input unit 1107, an interface unit 1108, a memory 1109, a processor 1110, and the like.

A person skilled in the art can understand that the terminal 1100 may further include a power supply (for example, a battery) for supplying power to the components. The power supply may be logically connected to the processor 1110 by a power management system, to implement functions such as charging, discharging, and power consumption management by using the power management system. The terminal structure shown in FIG. 11 does not constitute a limitation on the terminal, and the terminal may include more or fewer components than shown, or combine some components, or have different component arrangements.

It should be understood that, in this embodiment of this application, the input unit 1104 may include a graphics processing unit (Graphics Processing Unit, GPU) 11041 and a microphone 11042. The graphics processing unit 11041 performs processing on image data of a static picture or a video that is obtained by an image acquisition device (for example, a camera) in a video acquisition mode or an image acquisition mode. The display unit 1106 may include a display panel 11061. The display panel 11061 may be configured in a form of a liquid crystal display, an organic light-emitting diode, or the like. The user input unit 1107 includes at least one of a touch panel 11071 and another input device 11072. The touch panel 11071 is also referred to as a touch screen. The touch panel 11071 may include two parts: a touch detection apparatus and a touch controller. Specifically, the another input device 11072 may include, but not limited to, a physical keyboard, a functional button (for example, a volume control button or a switch button), a track ball, a mouse, and a joystick. This not described herein in detail.

In this embodiment of this application, after receiving downlink data from a network side device, the radio frequency unit 1101 can transmit the downlink data to the processor 1110 for processing; In addition, the radio frequency unit 1101 may transmit uplink data to the network side device. Generally, the radio frequency unit 1101 includes, but is not limited to, an antenna, an amplifier, a transceiver, a coupler, a low noise amplifier, a duplexer, and the like.

The memory 1109 may be configured to store software programs or instructions as well as various data. The memory 1109 may mainly include a first storage area for storing a program or instructions and a second storage area for storing data, where the first storage area may store an operating system, an application or instructions required for at least one function (for example, a sound playback function, and an image playback function), and the like. In addition, the memory 1109 may include a volatile memory or a non-volatile memory, or the memory 1109 may include both a volatile memory and a non-volatile memory. The non-volatile memory may be a read-only memory (Read-Only memory, ROM), a programmable ROM (Programmable ROM, PROM), an erasable PROM (erasable PROM, EPROM), an electrically EPROM (Electrically EPROM, EEPROM), or a flash memory. The volatile memory can be a random access memory (Random Access Memory, RAM), a static RAM (Static RAM, SRAM), a dynamic RAM (Dynamic RAM, DRAM), a synchronous DRAM (Synchronous DRAM, SDRAM), a double data rate SDRAM (Double Data Rate SDRAM, DD reference signal DRAM), an enhanced SDRAM (Enhanced SDRAM, ESDRAM), a sync link DRAM (Sync link DRAM, SLDRAM), and a direct Rambus RAM (Direct Rambus RAM, DRRAM). The memory 1109 in this embodiment of this application includes, but is not limited to, these and any other suitable types of memories.

The processor 1110 may include one or more processing units. Optionally, the processor 1110 integrates an application processor and a modem processor. The application processor mainly processes an operation involving an operating system, a user interface, an application, and the like, and the modem processor, for example, a baseband processor, mainly processes a wireless communication signal. It may be understood that the modem processor may not be integrated into the processor 1110.

The radio frequency unit 1101 is configured to receive a first signal sent by a first communication device; the processor 1110 is configured to modulate the first signal based on a second reference signal modulation sequence to obtain a second signal; and the radio frequency unit 1101 is further configured to send the second signal to a second communication device, where the second reference signal modulation sequence is an orthogonal sequence determined based on on-off keying OOK modulation information.

Alternatively, the radio frequency unit 1101 is configured to receive a target signal, where the target signal includes at least a first signal transmitted by a first communication device and/or a second signal transmitted by at least one backscatter end; and the processor 1110 is configured to locate at least one of the first communication device, a second communication device and a target backscatter end based on the first signal and/or at least one second signal, where the target backscatter end is any one of the at least one backscatter end, and the second signal is obtained by modulating the first signal based on a second reference signal modulation sequence, and the second reference signal modulation sequence is an orthogonal sequence determined based on on-off keying OOK modulation information.

In this embodiment, the received first signal is modulated based on a second reference signal modulation sequence, and the second signal obtained through modulation is sent, to enable the second communication device to perform a calculation on received target signal by utilizing an orthogonal characteristic of the second reference signal modulation sequence, to eliminate an interference signal, position a first communication device, a second communication device, or at least one backscatter end, and improve positioning precision.

In another implementation, the communication device 1000 may alternatively be a network side device. The network side device may include a processor and a communication interface. The communication interface is coupled to the processor. The processor is configured to run the program or instructions to implement the steps of methods described in the embodiment 200 to the embodiment 600. The network side device embodiment corresponds to the method embodiment of the first communication device or the second communication device or the network side device. Each implementation process and implementation of the method embodiment can be applied to the network side device embodiment and can achieve the same technical effects.

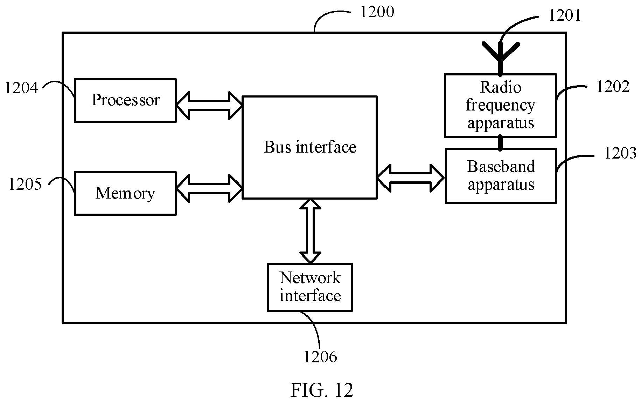

Specifically, an embodiment of this application further provides a network side device. As shown in FIG. 12, the network side device 1200 includes: an antenna 1201, a radio frequency apparatus 1202, a baseband apparatus 1203, a processor 1204, and a memory 1205. The antenna 1201 is connected to the radio frequency device 1202. In an uplink direction, the radio frequency apparatus 1202 receives information through the antenna 1201 and sends the received information to the baseband apparatus 1203 for processing. In a downlink direction, the baseband apparatus 1203 processes to-be-sent information and sends the to-be-sent information to the radio frequency apparatus 1202. The radio frequency apparatus 1202 processes the received information and sends the received information through the antenna 1201.

The method performed by the network side device in the foregoing embodiments may be implemented by a baseband apparatus 1203, where the baseband apparatus 1203 includes a baseband processor.

The baseband apparatus 1203 may, for example, include at least one baseband board on which a plurality of chips are provided, as shown in FIG. 12, where one chip, for example, a baseband processor, is connected to the memory 1205 through a bus interface, to invoke a program in the memory 1205, to perform a network device operation shown in the foregoing method embodiments.

The network side device may further include a network interface 1206, where the interface may be, for example, a common public radio interface (common public radio interface, CPRI).

Specifically, the network side device 1200 in this embodiment of this application further includes: instructions or a program stored in the memory 1205 and executable on the processor 1204. The processor 1204 invokes the instructions or the program in the memory 1205 to execute the method performed by the modules shown in FIG. 6 and achieve the same technical effects. Details are not repeated herein to avoid repetition.

An embodiment of this application also provides a readable storage medium, and a program or instructions are stored on the readable storage medium. When the program or instructions are executed by a processor, each process of the foregoing positioning method embodiments is implemented, and the same technical effects can be achieved. Details are not repeated herein to avoid repetition.

The processor is the processor in the terminal described in the foregoing embodiments. The readable storage medium includes a computer-readable storage medium, for example, a computer read-only memory ROM, a random access memory RAM, a magnetic disk, or an optical disk.

An embodiment of this application further provides a chip. The chip includes a processor and a communication interface. The communication interface is coupled to the processor. The processor is configured to run a program or instructions of a network side device, to implement each process of the foregoing positioning method embodiments, and the same technical effects can be achieved. Details are not repeated herein to avoid repetition.

It should be understood that chips mentioned in embodiments of this application may also be referred to as system-level chips, system chips, chip systems, or on-chip system chips, and the like.

An embodiment of this application further provides a computer program product. The computer program product includes a processor, a memory, and a program or instructions stored on the memory and executable on the processor. The program or instructions are used by the processor. When the processor is executed, each process of the foregoing positioning method embodiments is implemented, and the same technical effects can be achieved. Details are not repeated herein to avoid repetition.

An embodiment of this application further provides a positioning system, including: a first communication device and a second communication device. The first communication device is configured to perform the steps in the foregoing method embodiment 200 and method embodiment 300, and the second communication device is configured to perform the steps of the method in the foregoing mentioned embodiment 500.

In addition, when the second communication device or the first communication device is a network side device, the second communication device or the first communication device may also be configured to perform the steps in the foregoing method embodiment 600. Alternatively, if neither the first communication device nor the second communication device is a network side device, the positioning system may further include a network side device for performing the steps in the foregoing method embodiment 600.

It should be noted that, the terms "include", "comprise", or any other variation thereof are intended to cover a non-exclusive inclusion, such that the inclusion of a series of elements, processes, methods, objects, or apparatuses encompasses not only those elements explicitly listed but also encompasses other elements not explicitly listed, or inherent to such processes, methods, objects, or apparatuses. Without more limitations, elements defined by the sentence "including one" does not exclude that there are still other same elements in the processes, methods, objects, or apparatuses. Further, it should be noted that the scope of the methods and apparatuses in embodiments of this application is not limited to performing functions in the order shown or discussed, but may also include performing functions in a substantially simultaneous manner or in reverse order depending on functions involved, for example, the described methods may be performed in a different order than described, and various steps may be added, omitted, or combined. Additionally, characteristics described with reference to specific embodiments or implementations may be combined in other embodiments or implementations.

According to the descriptions in the foregoing implementations, a person skilled in the art may clearly learn that the methods according to the foregoing embodiments may be implemented by relying on software and a commodity hardware platform or by using hardware. Based on such an understanding, the technical solutions of this application essentially, or the part contributing to the conventional technology, may be presented in a form of a software product. The computer software product is stored in a storage medium (for example, a ROM/RAM, a magnetic disk, or an optical disc) including several instructions to enable a terminal device (which may be a mobile phone, a computer, a server, an air conditioner, a network device, or the like) to perform the methods described in the embodiments of this application.

Embodiments of this application are described with reference to the accompanying drawings. However, this application is not limited to the foregoing specific implementations. The foregoing specific implementations are merely examples, but are not limiting. A person skilled in the art may make many forms without departing from the object and the scope of the claims of this application and are within the protection scope of this application.

## Claims

1. A positioning method, comprising:

   receiving, by a backscatter end, a first signal sent by a first communication device;
   modulating, by the backscatter end, the first signal based on a second reference signal modulation sequence to obtain a second signal; and
   sending, by the backscatter end, the second signal to a second communication device, wherein
   the second reference signal modulation sequence is an orthogonal sequence determined based on on-off keying OOK modulation information.

2. The method according to claim 1, wherein the second reference signal modulation sequence comprises M or M+1 modulation symbols, M is related to a quantity of backscatter ends participating in a positioning process, and M is an integer greater than or equal to 1; and
   a relationship between a modulation time length corresponding to a first reference signal modulation sequence and a modulation time length corresponding to the second reference signal modulation sequence is M or M+1 times, and the first signal is obtained based on the first reference signal modulation sequence.

3. The method according to claim 2, wherein at least one of the first reference signal modulation sequence and the second reference signal modulation sequence comprises a positioning reference signal modulation sequence.

4. The method according to any one of claims 1 to 3, wherein before the step of modulating, by the backscatter end, the first signal based on a second reference signal modulation sequence to obtain a second signal, the method further comprises any one of the following:

   obtaining, by the backscatter end, the second reference signal modulation sequence from a network side device, wherein the second reference signal modulation sequence is selected by the network side device from a plurality of row vectors included in a first modulation matrix based on identification information of the backscatter end; and
   obtaining, by the backscatter end, the first modulation matrix from the network side device, and selecting the second reference signal modulation sequence from the plurality of row vectors included in the first modulation matrix based on the identification information of the backscatter end.

5. The method according to claim 4, wherein for the plurality of row vectors in the first modulation matrix, a first element in each of the row vectors is 1, a second element other than the first element is 0, and a position of the first element in each of the row vectors is different.

6. The method according to claim 5, wherein the first modulation matrix B is:

$$B=\begin{bmatrix} B_1 \\ B_2 \\ \vdots \\ B_M \end{bmatrix}=\begin{bmatrix} b_{1,1} & b_{1,2} & \cdots & b_{1,M+1} \\ b_{2,1} & b_{2,2} & \cdots & b_{2,M+1} \\ \vdots & \vdots & \ddots & \vdots \\ b_{M,1} & b_{M,2} & \cdots & b_{M,M+1} \end{bmatrix}=\begin{bmatrix} 1 & 0 & \cdots & 0 \\ 0 & 1 & \cdots & 0 \\ \vdots & \vdots & \ddots & \vdots \\ 0 & 0 & \cdots & 1 \end{bmatrix},$$

wherein M is an integer greater than or equal to 1.

7. The method according to claim 5, wherein each of the row vectors further comprises a third element, and a position of the third element in each of the row vectors is the same.

8. The method according to claim 7, wherein the first modulation matrix B is:

$$B=\begin{bmatrix} B_1 \\ B_2 \\ \vdots \\ B_M \end{bmatrix}=\begin{bmatrix} b_{1,1} & b_{1,2} & \cdots & b_{1,M+1} \\ b_{2,1} & b_{2,2} & \cdots & b_{2,M+1} \\ \vdots & \vdots & \ddots & \vdots \\ b_{M,1} & b_{M,2} & \cdots & b_{M,M+1} \end{bmatrix}=\begin{bmatrix} 0 & 1 & \cdots & 0 \\ 0 & 0 & \cdots & 0 \\ \vdots & \vdots & \ddots & \vdots \\ 0 & 0 & \cdots & 1 \end{bmatrix},$$

wherein M is an integer greater than or equal to 1.

9. The method according to any one of claims 1 to 8, wherein

in a case that a positioning scenario is a UU uplink positioning scenario, the first communication device is a terminal, and the second communication device is a network side device;
in a case that the positioning scenario is a UU downlink positioning scenario, the first communication device is the network side device, and the second communication device is the terminal; and
in a case that the positioning scenario is a sidelink positioning scenario, both the first communication device and the second communication device are terminals.

10. A positioning method, wherein the method comprises:

receiving, by a second communication device, a target signal, wherein the target signal comprises at least a first signal sent by a first communication device and/or a second signal transmitted by at least one backscatter end; and
locating, by the second communication device, at least one of the first communication device, the second communication device, and a target backscatter end based on the first signal and/or at least one second signal, wherein
the target backscatter end is any one of the at least one backscatter end, and the second signal is obtained by modulating the first signal based on a second reference signal modulation sequence, and the second reference signal modulation sequence is an orthogonal sequence determined based on on-off keying OOK modulation information.

11. The method according to claim 10, wherein

the second reference signal modulation sequence comprises M or M+1 modulation symbols, M is related to a quantity of backscatter ends participating in a positioning process, and M is an integer greater than or equal to 1; and
a relationship between a modulation time length corresponding to a first reference signal modulation sequence and a modulation time length corresponding to the second reference signal modulation sequence is M or M+1 times, and the first signal is obtained based on the first reference signal modulation sequence.

12. The method according to claim 11, wherein at least one of the first reference signal modulation sequence and the second reference signal modulation sequence comprises a positioning reference signal modulation sequence.

13. The method according to any one of claims 10 to 12, wherein a step of locating, by the second communication device, the first communication device based on the first signal and/or the at least one second signal comprises:

locating, by the second communication device, the first communication device based on a first target signal received in a first time unit, wherein
all backscatter ends do not perform signal transmission in the first time unit.

14. The method according to claim 13, wherein the first target signal $y_1[n]$ is:

$$y_1[n] = h_{sr}s[n] + \sum_{j=1}^{J} \alpha_j h_{st,j}^{(o)} h_{tr,j}^{(o)} s[n] + w_1[n],$$

wherein
$h_{sr}$ is a channel response between the first communication device and the second communication device, $\alpha_j$ is an attenuation coefficient of a $j^{th}$ unknown reflector that includes a radar cross section RCS, $h_{st,j}^{(o)}$ is a channel response between the first communication device and the $j^{th}$ unknown reflector, $h_{tr,j}^{(o)}$ is a channel response between the second communication device and the $j^{th}$ unknown reflector, $s[n]$ is the first signal, and $w_1[n]$ is an AWGN noise received in the first time unit.

15. The method according to any one of claims 10 to 12, wherein a step of locating, by the second communication device, the target backscatter end based on the first signal and/or the at least one second signal comprises:

if the target backscatter end is an m-th backscatter end in the at least one backscatter end, locating, by the second communication device, the m-th backscatter end based on a second target signal received in a second time unit and a third target signal received in a third time unit, wherein
the m-th backscatter end performs signal transmission in the second time unit, any backscatter end other than the m-th backscatter end of the at least one backscatter end performs signal transmission in the third time unit, and the third time unit is earlier than the second time unit.

16. The method according to claim 15, wherein the step of locating, by the second communication device, the m-th backscatter end based on a second target signal received in a second time unit and a third target signal received in a third time unit comprises:
in a case that the third time unit is a 1-st time unit and the second time unit is an (m+1)-th time unit, locating, by the second communication device, the m-th backscatter end based on a difference between a third target signal received in the (m+1)-th time unit and a second target signal received in the 1-st time unit, wherein m is a positive integer.

17. The method according to claim 16, wherein the difference $y_m'[n]$ is:

$$y_m'[n] = y_{m+1}[n] - y_1[n]$$
$$= \alpha \sum_{k=1}^{M} \left( h_{st,k}h_{tr,k}b_{k,m+1} - h_{st,k}h_{tr,k}b_{k,1} \right)s[n] + w_{m+1}[n] - w_1[n],$$
$$= \alpha h_{st,k}h_{tr,k}s[n] + w_{m+1}[n] - w_1[n]$$

wherein

$y_{m+1}[n]$ represents the third target signal, $y_1[n]$ represents the second target signal, $\alpha$ is a complex attenuation backscatter signal coefficient, $h_{st,k}$ is a channel response between the first communication device and a k-th backscatter end, $h_{tr,k}$ is a channel response between the second communication device and the k-th backscatter end, $w_1[n]$ is an AWGN noise received in the 1-st time unit, $w_{m+1}[n]$ is an AWGN noise received in the (m+1)-th time unit, and $s[n]$ is the first signal.

18. The method according to any one of claims 10 to 12, wherein a step of locating, by the second communication device, the first communication device and/or the at least one backscatter end based on the first signal and/or the at least one second signal comprises:

obtaining, by the second communication device, at least one of a first measurement parameter, a second measurement parameter, and a third measurement parameter based on the first signal and/or the at least one second signal; and
sending, by the second communication device, at least one of the first measurement parameter, the second measurement parameter, and the third measurement parameter to a sensing function, wherein
the first measurement parameter is used for locating the first communication device; the second measurement parameter is used for locating the second communication device; and the third measurement parameter is used for locating the at least one backscatter end.

19. The method according to any one of claims 10 to 18, wherein

in a case that a positioning scenario is a UU uplink positioning scenario, the first communication device is a terminal, and the second communication device is the network side device;
in a case that the positioning scenario is a UU downlink positioning scenario, the first communication device is the network side device, and the second communication device is the terminal; and
in a case that the positioning scenario is a sidelink positioning scenario, both the first communication device and the second communication device are terminals.

20. A positioning method, comprising:

sending, by a network side device based on identification information of at least one backscatter end, a second reference signal modulation sequence to each backscatter end; or
sending, by the network side device, a first modulation matrix to the at least one backscatter end, wherein
the second reference signal modulation sequence is an orthogonal sequence determined based on on-off keying OOK modulation information, and the second reference signal modulation sequence is any one of a plurality of row vectors included in the first modulation matrix.

21. The method according to claim 20, wherein the second reference signal modulation sequence comprises at least a positioning reference signal modulation sequence.

22. The method according to claim 20, wherein for the at least one backscatter end, at least a part of the second reference signal modulation sequence corresponding to each backscatter end is different.

23. The method according to claim 20, wherein for the plurality of row vectors in the first modulation matrix, a first element in each of the row vectors is 1, a second element other than the first element is 0, and a position of the first element in each of the row vectors is different.

24. The method according to claim 23, wherein the first modulation matrix B is:

$$B = \begin{bmatrix} B_1 \\ B_2 \\ \vdots \\ B_M \end{bmatrix} = \begin{bmatrix} b_{1,1} & b_{1,2} & \cdots & b_{1,M+1} \\ b_{2,1} & b_{2,2} & \cdots & b_{2,M+1} \\ \vdots & \vdots & \ddots & \vdots \\ b_{M,1} & b_{M,2} & \cdots & b_{M,M+1} \end{bmatrix} = \begin{bmatrix} 1 & 0 & \cdots & 0 \\ 0 & 1 & \cdots & 0 \\ \vdots & \vdots & \ddots & \vdots \\ 0 & 0 & \cdots & 1 \end{bmatrix},$$

wherein M is an integer greater than or equal to 1.

25. The method according to claim 23, wherein each of the row vectors further comprises a third element, and a position of the third element in each of the row vectors is the same.

26. The method according to claim 25, wherein the first modulation matrix B is:

$$B=\begin{bmatrix} B_1 \\ B_2 \\ \vdots \\ B_M \end{bmatrix}=\begin{bmatrix} b_{1,1} & b_{1,2} & \cdots & b_{1,M+1} \\ b_{2,1} & b_{2,2} & \cdots & b_{2,M+1} \\ \vdots & \vdots & \ddots & \vdots \\ b_{M,1} & b_{M,2} & \cdots & b_{M,M+1} \end{bmatrix}=\begin{bmatrix} 0 & 1 & \cdots & 0 \\ 0 & 0 & \cdots & 0 \\ \vdots & \vdots & \ddots & \vdots \\ 0 & 0 & \cdots & 1 \end{bmatrix},$$

wherein M is an integer greater than or equal to 1.

27. A positioning apparatus, comprising:

a first receiving module, configured to receive a first signal sent by a first communication device;
a first modulation module, configured to modulate the first signal based on a second reference signal modulation sequence to obtain a second signal; and
a first sending module, configured to send the second signal to a second communication device, wherein
the second reference signal modulation sequence is an orthogonal sequence determined based on on-off keying OOK modulation information.

28. A positioning apparatus, wherein the apparatus comprises:

a second receiving module, configured to receive a target signal, wherein the target signal comprises at least a first signal sent by a first communication device and/or a second signal transmitted by at least one backscatter end; and
a positioning module, configured to locate at least one of the first communication device, a second communication device and a target backscatter end based on the first signal and/or at least one second signal, wherein
the target backscatter end is any one of the at least one backscatter end, and the second signal is obtained by modulating the first signal based on a second reference signal modulation sequence, and the second reference signal modulation sequence is an orthogonal sequence determined based on on-off keying OOK modulation information.

29. A positioning apparatus, comprising:

a second sending module, configured to send, based on identification information of at least one backscatter end, a second reference signal modulation sequence to each backscatter end; or a second sending module, configured to send a first modulation matrix to at least one backscatter end, wherein
the second reference signal modulation sequence is an orthogonal sequence determined based on on-off keying OOK modulation information, and the second reference signal modulation sequence is any one of a plurality of row vectors included in the first modulation matrix.

30. A communication device, comprising a processor and a memory, wherein the memory stores a program or instructions executable on the processor, and when the program or instructions are executed by the processor, steps of the positioning method according to any one of claims 1 to 9 are implemented, steps of the positioning method according to any one of claims 10 to 19 are implemented, or steps of the positioning method according to any one of claims 20 to 26 are implemented.

31. A computer-readable storage medium, wherein the computer-readable storage medium stores a program or instructions, and when the program or instructions are executed by a processor, steps of the positioning method according to any one of claims 1 to 9 are implemented, steps of the positioning method according to any one of claims 10 to 19 are implemented, or steps of the positioning method according to any one of claims 20 to 26 are implemented.

FIG. 1a

FIG. 1b

FIG. 1c

FIG. 1d

200

A backscatter end receives a first signal sent by a first communication device — S210

The backscatter end modulates the first signal based on a second reference signal modulation sequence to obtain a second signal — S220

The backscatter end sends the second signal to a second communication device — S230

FIG. 2

300

| S310 |
| A backscatter end receives a first signal sent by a first communication device |

↓

| S320 |
| The backscatter end modulates the first signal based on a second reference signal modulation sequence to obtain a second signal |

↓

| S330 |
| The backscatter end sends the second signal to a second communication device |

FIG. 3

| First communication device | First reference signal modulation sequence | First reference signal modulation sequence | First reference signal modulation sequence | First reference signal modulation sequence |

Backscatter end

◄——————— Second reference signal modulation sequence ———————►

FIG. 4a

|  | 1 | 2 | | $M-1$ | $M$ | |
|---|---|---|---|---|---|---|
| Backscatter end-1 | 1 | 0 | ... | 0 | 0 | $B_1$ |
| Backscatter end-2 | 0 | 1 | | 0 | 0 | $B_2$ |
| Backscatter end-$(M-1)$ | 0 | 0 | ... | 1 | 0 | $B_{M-1}$ |
| Backscatter end-$M$ | 0 | 0 | ... | 0 | 1 | $B_M$ |

◄—► Slot

FIG. 4b

| | 1 | 2 | 3 | | $M$ | $M+1$ | |
|---|---|---|---|---|---|---|---|
| Backscatter end-1 | 0 | 1 | 0 | ... | 0 | 0 | $B_1$ |
| Backscatter end-2 | 0 | 0 | 1 | | 0 | 0 | $B_2$ |
| Backscatter end-$(M-1)$ | 0 | 0 | 0 | ... | 1 | 0 | $B_{M-1}$ |
| Backscatter end-$M$ | 0 | 0 | 0 | ... | 0 | 1 | $B_M$ |

Slot

Third element

FIG. 4c

Terminal — Backscatter end 1 — gNB

$h_{sr}(\tau_{sr})$

$s[n]$ — $h_{st}(\tau_{st})$ — $b_{1,m} = \begin{cases} 0 \\ 1 \end{cases}$ — $h_{tr}(\tau_{tr})$ — $y_m[n]$

FIG. 4d

SUE

$h_{st,1}(\tau_{st,1})$  Backscatter end 1  $h_{tr,1}(\tau_{tr,1})$

$h_{sr}(\tau_{sr})$

$h_{st,2}(\tau_{st,2})$  $h_{tr,2}(\tau_{tr,2})$

Backscatter end 2

$h_{st,K}(\tau_{st,K})$  $h_{tr,K}(\tau_{tr,K})$

Backscatter end $K$

RSU

FIG. 4e

500

| |
|---|
| A second communication device receives a target signal, where the target signal includes at least a first signal sent by a first communication device and/or a second signal sent by at least one backscatter end |

S510

| |
|---|
| The second communication device locates at least one of the first communication device, the second communication device, and a target backscatter end based on the first signal and/or at least one second signal |

S520

FIG. 5

600

| |
|---|
| A network side device sends a second reference signal modulation sequence to each backscatter end based on identification information of at least one backscatter end; or the network side device sends a first modulation matrix to at least one backscatter end |

S610

FIG. 6

700

| |
|---|
| First receiving module |

710

| |
|---|
| First modulation module |

720

| |
|---|
| First sending module |

730

FIG. 7

800

Second receiving module 810

Positioning module 820

FIG. 8

900

Second sending module 910

FIG. 9

1000

Communication device

1001 Processor ⟷ Memory 1002

FIG. 10

FIG. 11

FIG. 12

<table>
<tr><td colspan="2" align="center">**INTERNATIONAL SEARCH REPORT**</td><td colspan="2">International application No.<br>**PCT/CN2022/144199**</td></tr>
</table>

**A.    CLASSIFICATION OF SUBJECT MATTER**

H04W4/02(2018.01)i

According to International Patent Classification (IPC) or to both national classification and IPC

**B.    FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI; 3GPP: 定位, 反向散射, 反射, 调制, 参考, 信号, 正交, 通断, 键控, OOK, position, backscatter, reflection, modulation, reference, signal, quadrature, on-off keying

**C.    DOCUMENTS CONSIDERED TO BE RELEVANT**

| Category* | Citation of document, with indication, where appropriate, of the relevant passages | Relevant to claim No. |
|---|---|---|
| A | CN 112073082 A (CHENGDU HUAWEI TECHNOLOGIES CO., LTD.) 11 December 2020 (2020-12-11)<br>    description, paragraphs [0057]-[0235] | 1-31 |
| A | CN 110166194 A (HUAWEI TECHNOLOGIES CO., LTD.) 23 August 2019 (2019-08-23)<br>    entire document | 1-31 |
| A | CN 111277383 A (VIVO COMMUNICATION TECHNOLOGY CO., LTD.) 12 June 2020 (2020-06-12)<br>    entire document | 1-31 |
| A | CN 113630853 A (DATANG MOBILE COMMUNICATIONS EQUIPMENT CO., LTD.) 09 November 2021 (2021-11-09)<br>    entire document | 1-31 |
| A | CN 113766528 A (VIVO COMMUNICATION TECHNOLOGY CO., LTD.) 07 December 2021 (2021-12-07)<br>    entire document | 1-31 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 February 2023** | **23 March 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/144199**

| Patent document cited in search report | | | Publication date (day/month/year) | Patent family member(s) | Publication date (day/month/year) |
|---|---|---|---|---|---|
| CN | 112073082 | A | 11 December 2020 | None | |
| CN | 110166194 | A | 23 August 2019 | None | |
| CN | 111277383 | A | 12 June 2020 | None | |
| CN | 113630853 | A | 09 November 2021 | None | |
| CN | 113766528 | A | 07 December 2021 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111679567